# EUROPEAN PATENT APPLICATION

(11) **EP 4 432 496 A1**
(43) Date of publication of application: **18.09.2024**
(21) Application number: 24159419.1
(22) Date of filing: 23.02.2024
(51) Int. Cl.: H02G 1/12, H01R 43/28

(54) **ADVANCED CABLE PREPARATION SYSTEM AND METHOD**

(30) Priority: 23.02.2023 US 202363486500 P
(71) Applicant: ULC Technologies, LLC, Hauppauge, NY 11788 (US)
(72) Inventor: CARADONNA, Austin, Massapequa (US); SENFT, John, Babylon (US); SYMINGTON, Alex, Middle Island (US); KURILOFF, Jonathan, Middle Island (US); HTAIK, Than, Central Islip (US); SEMET, Dennis, New Hyde Park (US); ASMARI, Ali, Selden (US)
(74) Representative: Viering, Jentschura & Partner mbB Patent- und Rechtsanwälte

(57) **Abstract**

An advanced cable preparation system for automatically and accurately preparing electric cables for termination is provided. The system includes multiple subassemblies and modules for removing one or more cable layers in order to prepare the cable end(s) for safe and effective termination. The system can include a housing with a sensor module, a processing module, and a one or more subassemblies including a cutting module, a power module, a neutral handling module, and a communication module. Some embodiments of the system can also include a heating module and a roller module. The advanced cable preparation system and method automatically detects one or more cable parameters of the electric cable using the sensor module and adjusts the configuration of one or more modules to appropriately remove one or more layers of the electric cable to prepare the electric cable for termination.

## Description

### RELATED APPLICATIONS

This application claims priority to U.S. Provisional Patent Application No. 63/486,500 filed February 23, 2023, the entire disclosure of which is incorporated herein by reference.

### FIELD OF THE INVENTION

This disclosure generally relates to a system and method for preparing electric cables for installation. More specifically, this disclosure relates to a cable preparation method and a system for automatically removing one or more layers of an electric cable.

### BACKGROUND

Conventional processes for preparing electric cables for termination are time-consuming, utilize highly skilled laborers, and are prone to error, which can be dangerous and costly. Medium voltage cable preparation, termination, and splicing is an important process in electrical installation projects, particularly within the utility and renewable energy industries. Medium voltage cables typically vary from 5kV to 35kV and are made up of several layers and styles, each of which must be properly and skillfully stripped or cut back to prepare for termination or splicing. The high demand and low supply of these trained and certified workers cause bottlenecks and high labor expenses for companies working in the field of medium voltage systems.

Additionally, incidental faults and premature failures of systems due to human error during the cable preparation process, even among certified workers, can result in not only costly repairs, but even loss of business for new installations in extreme cases. The danger of working with medium voltage systems can also lead to serious safety risks. Even small damages to cable insulation can be dangerous and increase the potential for electrical faults.

In a typical cable end preparation process, a technician performs the following steps manually. (1) Make a square cut at the end of the cable through its full thickness to remove any deformities from installation. (2) Remove the outer jacket from a specified length of the cable, often by cutting through the jacket circumferentially and longitudinally using a hand blade. In the case of cables with concentric neutrals, one of the neutral wires may be pulled through the outer jacket to create a spiral cut. (3) Remove the outer shield from a specified length of cable. For a tape shield, this is typically accomplished by cutting through the tape circumferentially and then peeling the tape away in a spiral. Ground straps and concentric neutrals are typically lifted away radially from the cable and folded back longitudinally over the outer jacket to expose the insulation shield. (4) Remove the insulation shield from a specified length of cable, exposing the insulation. This semiconducting layer is typically scored circumferentially and longitudinally (or in a spiral) using a hand blade and peeled away. In some instances, this layer is bonded to the insulation, requiring that it be shaved off. (5) Remove the insulation from a specified length of the cable by cutting through it circumferentially and longitudinally, or in a spiral using a hand blade. (6) Remove the conductor shield from a specified length of the cable by cutting through it circumferentially and longitudinally, or in a spiral using a hand tool. Frequently, this step is combined with the previous step, such that the insulation and conductor shield are cut back the same length and removed in a single operation. (7) Sanding and/or cleaning certain layers with solvent and adding a chamfer to the exposed edge of the insulation layer, when required.

At large job sites, hundreds (if not more) of cable terminations are performed before the commissioning process, demanding a significant amount of skilled labor to complete the work on schedule. Cable preparation at this scale can be tedious, and mistakes can be costly. For instance, if a technician makes even a small nick in a cable's insulation while removing its insulation shield, the damaged region must be cut off and the preparation process must be started over; in cases where there is not enough remaining cable length to start over, a section of cable several hundred feet long may need to be replaced.

### SUMMARY

An advanced cable preparation system for removing electric cable layers is provided. The advanced cable preparation system can include a housing with an outer frame shell and one or more handle devices. The system can further include a sensor module designed to determine one or more cable parameters. A processing module is also included, with a processor and a memory unit, wherein the processing module is designed to process data collected from the sensor module. The system also includes one or more subassemblies including one or more of a cutting module, a heating module, a roller module, and a neutral handling module. The advanced cable preparation system can also include a communication module designed to connect to an interface module.

In some forms, the cable preparation system can further include a housing with an aperture designed to accept the electric cable. Some embodiments may further include a power module. The power module can be provided in the form of one or more battery units. In some embodiments, the cable preparation system may also include a motor module with one or more motors, a control module, a clamping module, a sliding module, or a combination thereof.

In another embodiment, a method of preparing an electric cable for termination is provided. The method can include providing an advanced cable preparation system including a housing, a sensor module, a processing module, and one or more subassemblies. One or more cable parameters of the electric cable can be determined using the sensor module. A jacket of the electric cable can be stripped using a cutting module of the one or more subassemblies. The one or more neutral wires of the electric cable can be manipulated based on the one or more cable parameters of the electric cable using a neutral handling module of the tool assembly. An insulation shield is scored using the cutting module the electric cable is heated using a heating module of the one or more subassemblies. The insulation shield is removed using a roller module of the one or more subassemblies. An insulation layer of the electric cable is stripped using the cutting tool of the one or more subassemblies.

In some embodiments, the method can further include the detecting that the electric cable has entered the housing through an aperture in the housing using the sensor module and initiating a cable preparation process. In some forms, one or more modules of the one or more subassemblies can be automatically configured based on the one or more cable parameters of the electric cable. In some embodiments, the sensor module can detect or determine a cable diameter and/or a cable layer thickness of the electric cable. In some embodiments, the method may further comprise clamping the electric cables using one or more spring-loading clamping devices to dynamically adapt to the cable diameter. The roller module can be pressed into the electric cable using an actuator provided in the form of an electric actuator.

In another embodiment, a method of preparing an electric cable for termination is provided. The method can include providing an advanced cable preparation system including a housing, a sensor module, a processing module, and one or more subassemblies. The sensor module determines one or more cable parameters of the electric cable. A jacket of the electric cable is stripped using a cutting module of the one or more subassemblies. One or more neutral wires of the electric cable are manipulated based on the one or more cable parameters of the electric cable using a neutral handling module of the tool assembly. The insulation shield is shaved and an insulation layer of the electric cable is stripped using the cutting module of the one or more subassemblies.

In some embodiments, the method can further include collecting one or more of the shaved or stripped layers of the electric cable. The electrical cable can be clamped with a clamping module of the one or more subassemblies. In some forms, the sensor module detects when the cutting module is activated and activates the clamping module when the cutting module is activated. In some aspects, the sensor module detects whether the clamping method has been activated. The one or more cable parameters can include a cable diameter. The electrical cable may be clamped with the clamping module of the one or more subassemblies and the clamping module is automatically adjusted based on the cable diameter.

### BRIEF DESCRIPTION OF DRAWINGS

FIG. 1A is an isometric view of a front, top, and side view of a typical electric semiconductor cable prepared for termination;
FIG. 1B is a cross-sectional view of an interior portion of the layers of the cable of FIG. 1A;
FIG. 2A is an isometric view of a front and a side of an advanced cable preparation system for preparing the cable of FIGS. 1A and 1B with a housing partially removed for clarity;
FIG. 2B is a block diagram of example subassemblies of the advanced cable preparation system of FIG. 2A;
FIG. 3A is an isometric view of a rear and a side of the system of FIG. 2A;
FIG. 3B is an isometric view of a rear and a side of the system shown in FIG. 3A without the housing partially removed;
FIG. 4A is an isometric view of the rear and side of the system of FIG. 2A;
FIG. 4B is a side elevational view of the system of FIG. 2A;
FIG. 5 is a partial front isometric view of a cutting module of the system of FIG. 2A;
FIG. 6 is a partial front isometric of a heating module and a roller module of the system of FIG. 2A;
FIG. 7A is a partial side isometric view of another embodiment of the heating module and the roller module of FIG. 6;
FIG. 7B is a partial side isometric view of the heating module and the roller module of FIG. 7A;
FIG. 8A is a partial side isometric view of a clamping module and a cutting module of the system of FIG. 2A in a first configuration;
FIG. 8B is a partial side isometric view of the system diagram of FIG. 8A in a second configuration;
FIG. 9A is a partial front isometric view of a clamping module of the system of FIG. 2A in a first configuration where the clamping device is engaged around the cable;
FIG. 9B is a front isometric view of the clamping module of FIG. 9A in a second configuration where the clamping device is not engaged around the cable;
FIG. 10A is a side plan view of a rotary motor subsystem of the system of FIG. 2A;
FIG. 10B is a side plan view of a linear drive motor subsystem of the system of FIG. 2A;
FIG. 11 is a side plan view of a rotary motor subsystem of the system of FIG. 2A;
FIG. 12A is an illustrative motion diagram of a linear motion followed by a rotary motion of the system of FIG. 2A;
FIG. 12B is an illustrative motion diagram of a rotary motion followed by a linear motion of the system of FIG. 2A;
FIG. 13 is a side isometric view of a rotary motor subsystem of the system of FIG. 2A;
FIG. 14 is a partial side isometric view of a linear motor subsystem of the of the system of FIG. 2A;
FIG. 15 is a process diagram for an advanced cable preparation method;
FIG. 16 is a process diagram for a cable layer cutback process;
FIG. 17 is a process diagram for an outer shield manipulation process;
FIG. 18A is a bottom perspective view for a neutral handling module of the system of FIG. 2A in a first configuration;
FIG. 18B is a bottom perspective view for the neutral handling module of FIG. 18A in a second configuration;
FIG. 18C is a bottom perspective view for the neutral handling module of FIGS. 18A and 18B in a third configuration;
FIG. 19A is a partial enlarged bottom plan view of the neutral handling module of FIG. 18A in a first configuration;
FIG. 19B is a partial enlarged bottom plan view of the neutral handling module of FIG. 18A in a second configuration;
FIG. 19C is a partial enlarged bottom plan view of the neutral handling module of FIG. 18A in a third configuration;
FIG. 19D is a partial enlarged bottom plan view of the neutral handling module of FIG. 18A in a fourth configuration;
FIG. 19E is a partial enlarged bottom plan view of the neutral handling module of FIG. 18A in a fifth configuration;
FIG. 19F is a partial enlarged bottom plan view of the neutral handling module of FIG. 18A in a sixth configuration;
FIG. 20A is a partial enlarged isometric view of an alternative embodiment of the neutral handling module shown in FIG. 18A;
FIG. 20B is an enlarged isometric view of the neutral handling module of FIG. 20A;
FIG. 21A is an isometric view of an outer shield end effector of the advanced cable preparation system;
FIG. 21B is a rotated view of the outer shield end effector of FIG. 21A;
FIG. 21C is a rotated view of the outer shield end effector of FIG. 21A;
FIG. 22 is a bottom isometric view of an alternative embodiment of the neutral handling module of FIG. 18A;
FIG. 23A is a bottom isometric view of the neutral handling module of FIG. 22 in a first configuration;
FIG. 23B is a bottom isometric view of the neutral handling module of 23A in a second configuration;
FIG. 23C is a bottom isometric view of the neutral handling module of 23A in a third configuration;
FIG. 23D is a bottom isometric view of the neutral handling module of 23A in a fourth configuration;
FIG. 23E is a side isometric view of a device for holding coiled wire that is coiled with the neutral handling module of FIG. 23D;
FIG. 24A is a bottom plan view of the neutral handling module of FIG. 23A in a first configuration;
FIG. 24B is a bottom plan view of the neutral handling module of FIG. 24A in a second configuration;
FIG. 24C is a bottom plan view of the neutral handling module of FIG. 24A in a third configuration;
FIG. 25A is a side plan view of a gripping device of the neutral handling module of FIG. 23A in an open position;

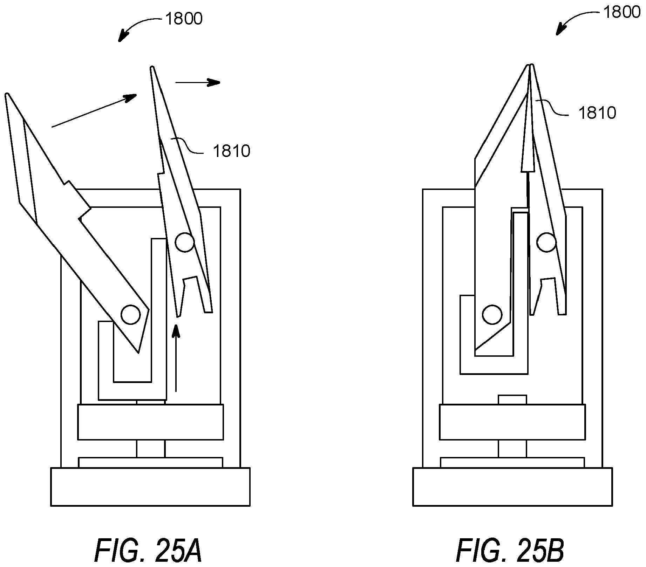

FIG. 25A is a side plan view of a gripping device of the neutral handling module of FIG. 25A in a closed position;

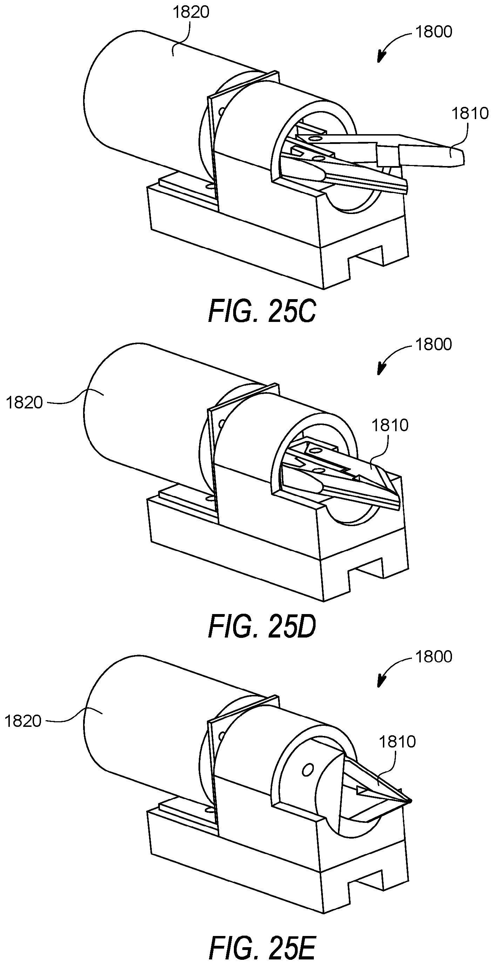

FIG. 25C is a side isometric view of the gripping device of FIG. 25A coupled to a rotating device of the neutral handling module, where the gripping device is in an open position;
FIG. 25D is a side isometric view of the gripping device of FIG. 25A coupled to a rotating device of the neutral handling module, where the gripping device is in a closed position of a first orientation;
FIG. 25E is a side isometric view of the gripping device of FIG. 25A coupled to a rotating device of the neutral handling module, where the gripping device is in a closed position of a second orientation;

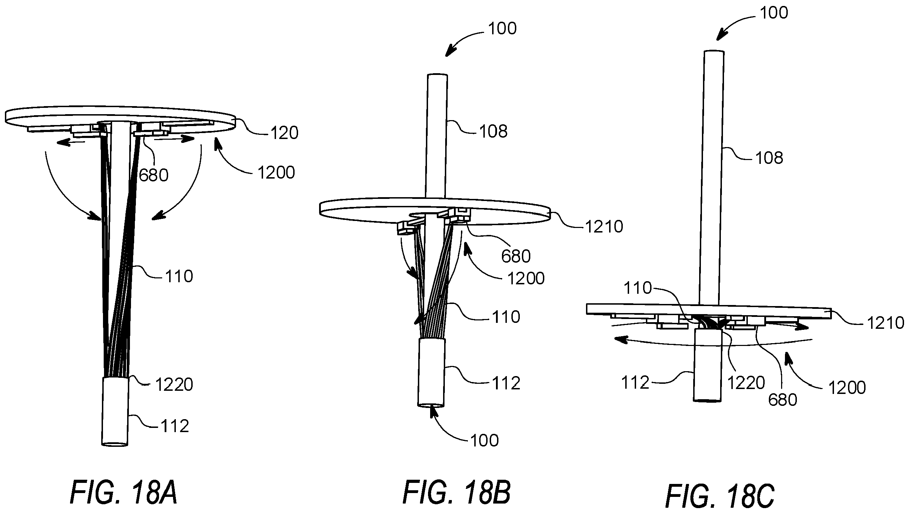

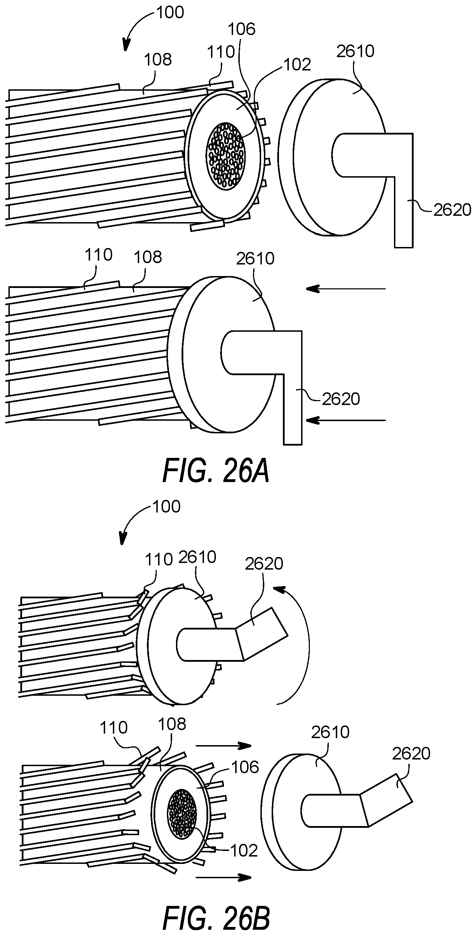

FIG. 26A is a side isometric view of an alternative embodiment of the neutral handling module of FIG. 18A in a first configuration;
FIG. 26B is a side isometric view of the neutral handling module of FIG. 26A in a second configuration;

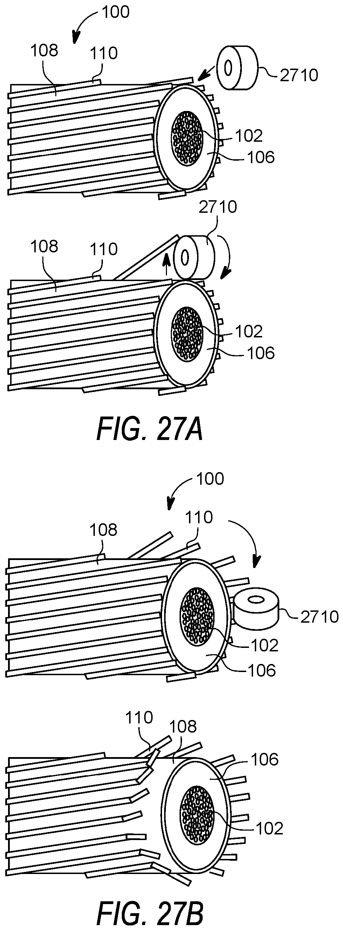

FIG. 27A is a side isometric view of an alternative embodiment of the neutral handling module of FIG. 18A in a first configuration;
FIG. 27B is a side isometric view of the neutral handling module of FIG. 27A in a second configuration;

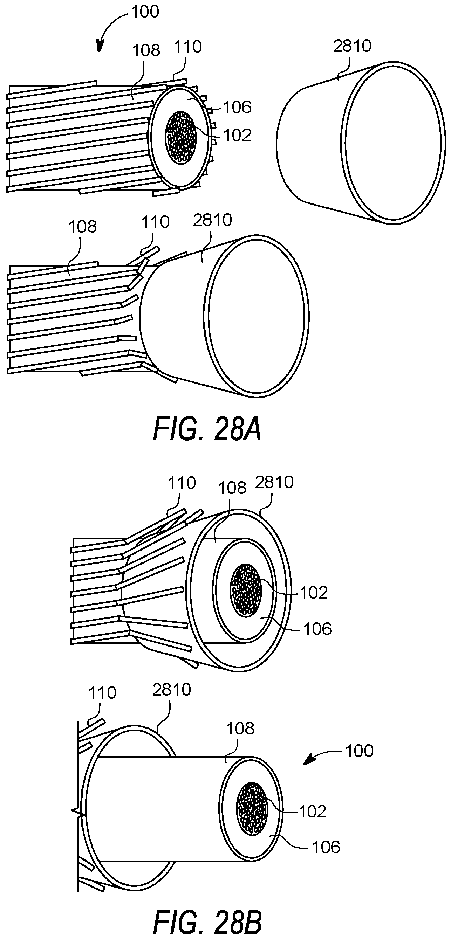

FIG. 28A is a side isometric view of an alternative embodiment of the neutral handling module of FIG. 18A in a first configuration;
FIG. 28B is a side isometric view of the neutral handling module of FIG. 28A in a second configuration;

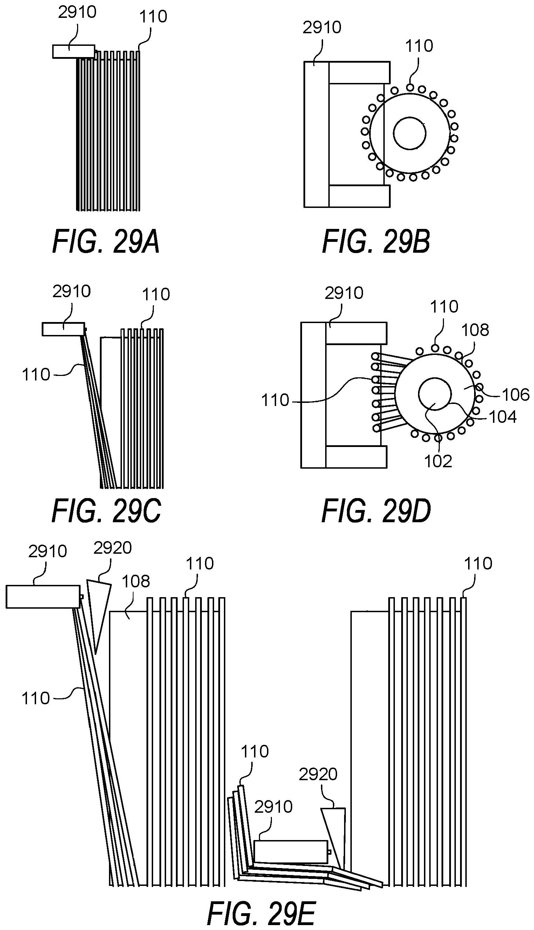

FIG. 29A is a side plan view of an alternative embodiment of the neutral handling module of FIG. 18A in a first configuration;
FIG. 29B is a top plan view of the neutral handling module of the advanced cable preparation system of in FIG. 29A in a first configuration;
FIG. 29C is a side plan view of the neutral handling module of FIG. 29A in a second configuration;
FIG. 29D is a top plan view of the neutral handling module of the advanced cable preparation system of in FIG. 29C;
FIG. 29E is a side plan view of an alternative embodiment of the neutral handling module of FIG. 29A;

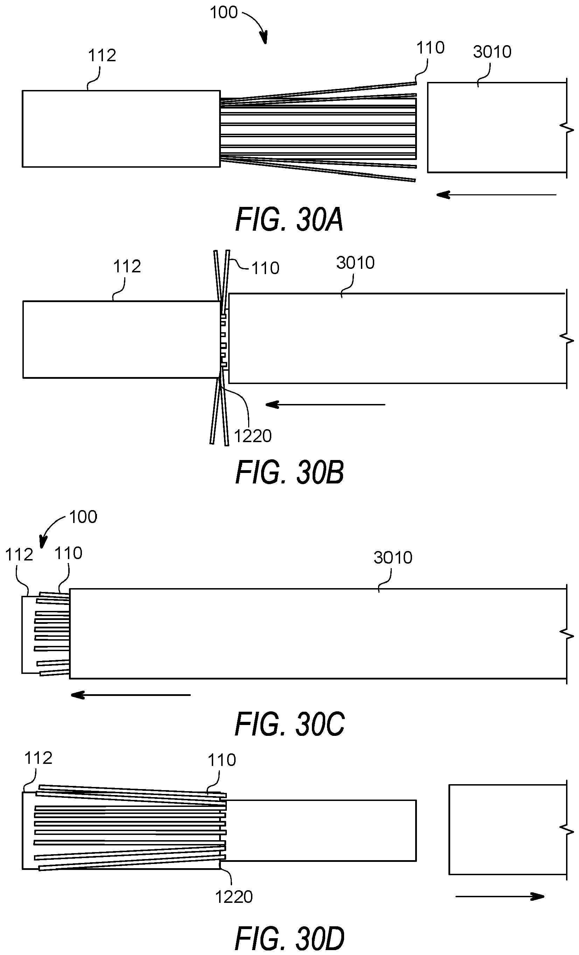

FIG. 30A is a side plan view of an alternative embodiment of the neutral handling module of FIG. 18A in a first configuration;
FIG. 30B is a side plan view of the neutral handling module of FIG. 30A in a second configuration;
FIG. 30C is a side plan view of the neutral handling module of FIG. 30A in a third configuration;
FIG. 30D is a side plan view of the neutral handling module of FIG. 30A in a fourth configuration;

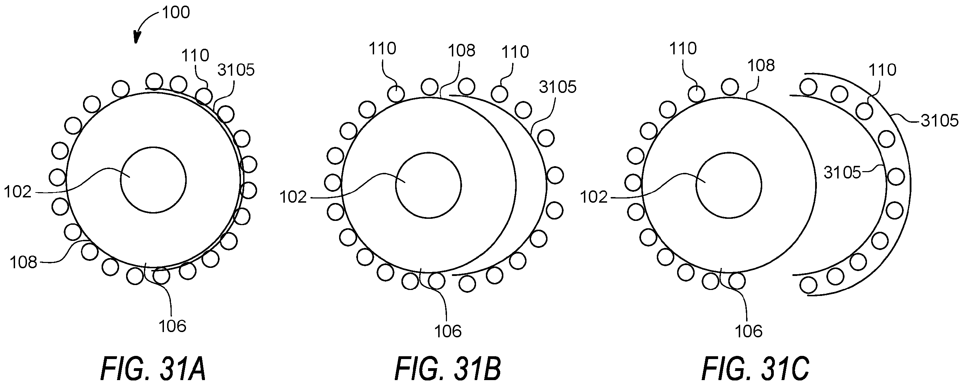

FIG. 31A is a front plan view of an alternative embodiment of the neutral handling module of FIG. 18A in a first configuration;
FIG. 31B is a front plan view of the neutral handling module of FIG. 31A in a second configuration;
FIG. 31C is a front plan view of the neutral handling module of FIG. 31A in a third configuration;

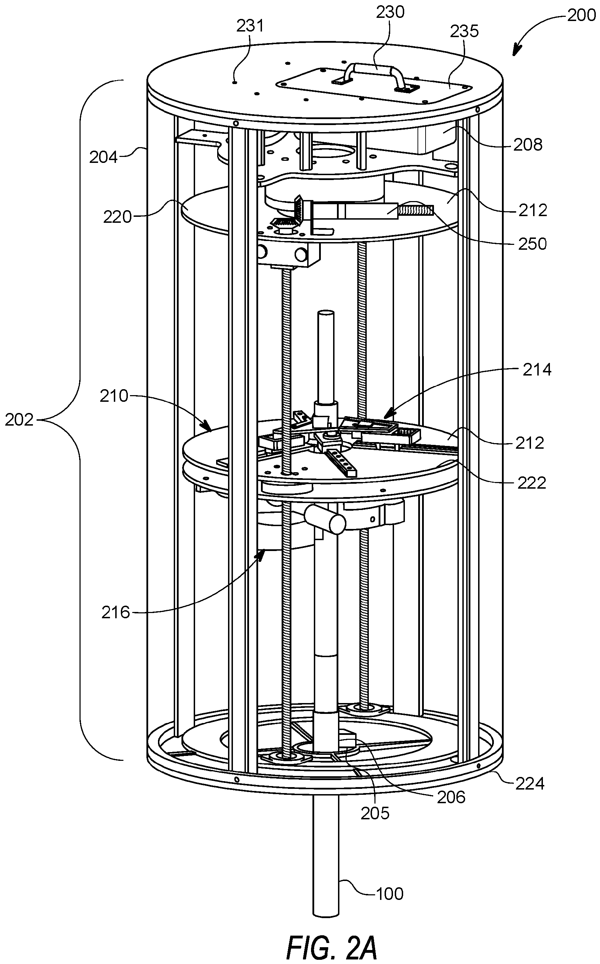

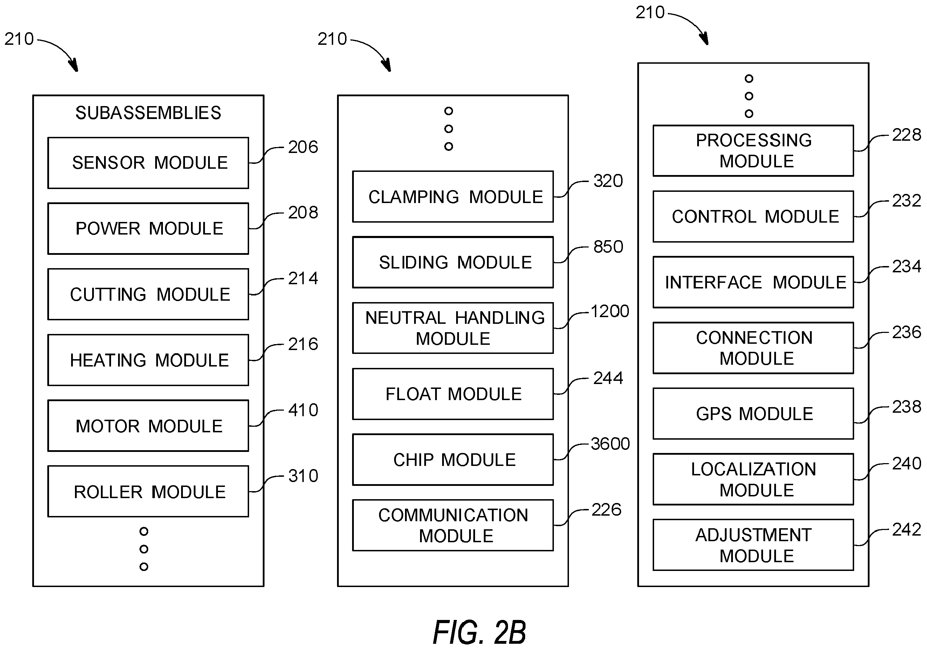

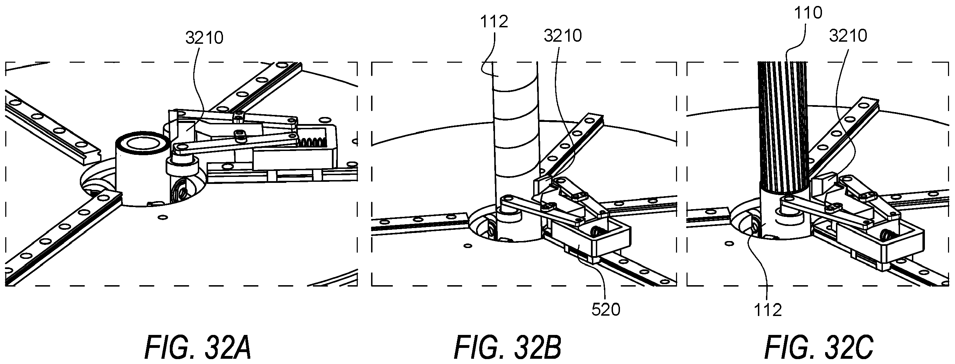

FIG. 32A is a partial isometric top view of a cutting model of the system of FIG. 2 removing a jacket layer of a cable in a first configuration;
FIG. 32B is a partial isometric top view of the cutting of FIG. 32A in a second configuration;
FIG. 32C is a partial isometric top view of the cutting of FIG. 32A in a third configuration;

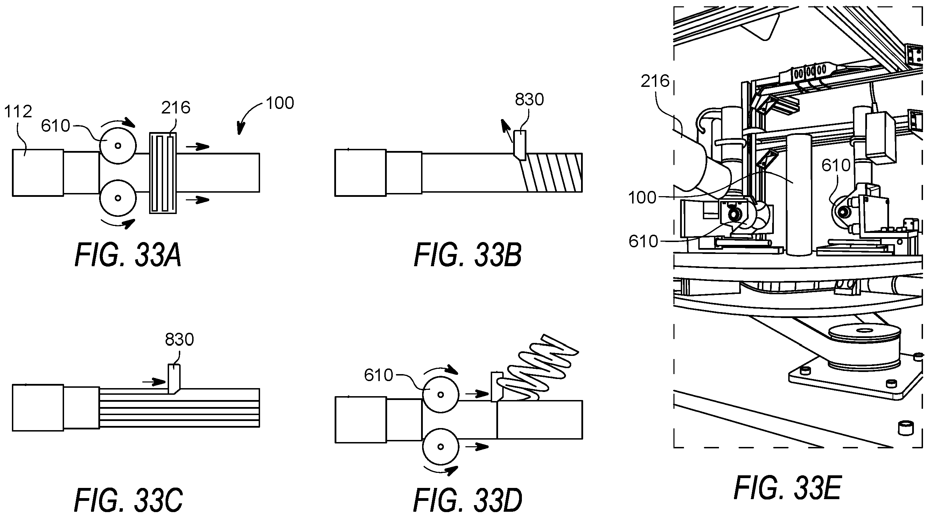

FIG. 33A is a diagram illustrating a first step in an insulation shield layer removal method;
FIG. 33B is a diagram illustrating a second step in the insulation shield layer removal method of FIG. 33A;
FIG. 33C is a diagram illustrating a third step in the insulation shield layer removal method of FIG. 33A;
FIG. 33D is a diagram illustrating a fourth step in the insulation shield layer removal method of FIG. 33A;
FIG. 33E is a partial side isometric view of a heating module of the insulation shield layer removal method of FIG. 33A;

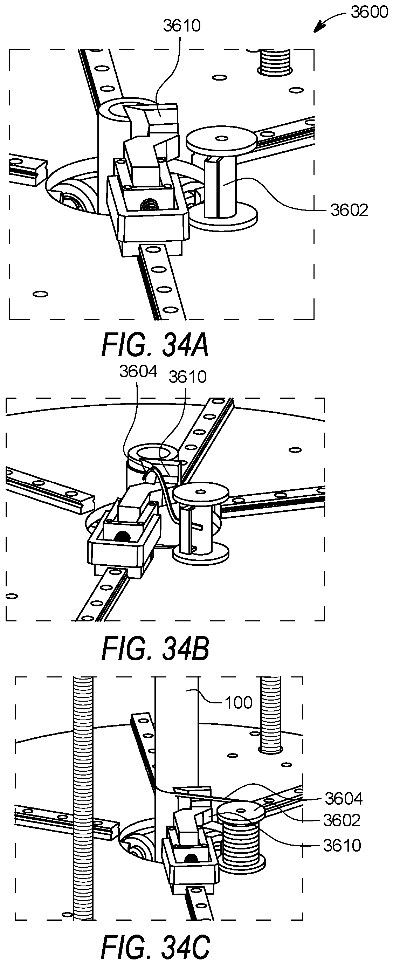

FIG. 34A is a top isometric view of a first step of a chip module process of the system of FIG. 2A;
FIG. 34B is a top isometric view of a second step of the chip module process of FIG. 34A;
FIG. 34C is a top isometric view of a third step of the chip module process of FIG. 34A;

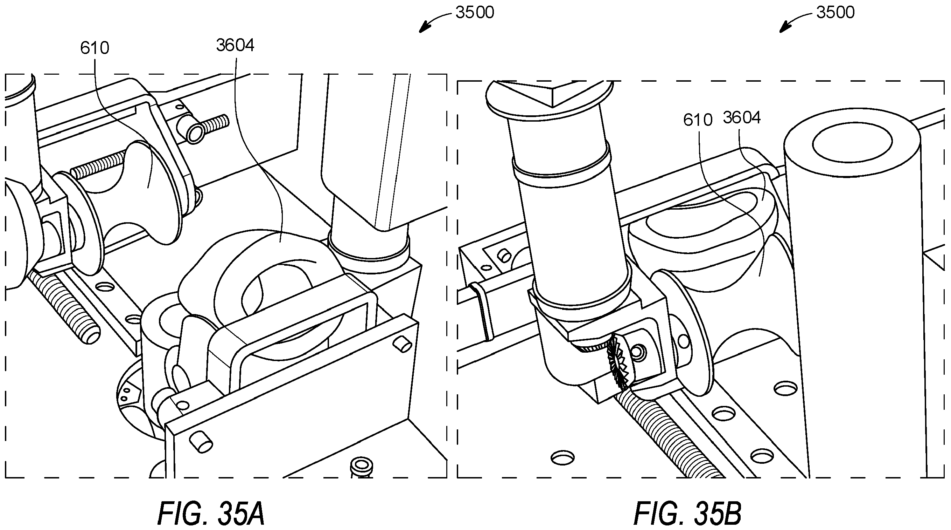

FIG. 35A is a partial top isometric view of an insulation shield removal module of the system of FIG. 2A in a first configuration;
FIG. 35B is a partial top isometric view of the insulation shield removal module of FIG. 35A in a second configuration;

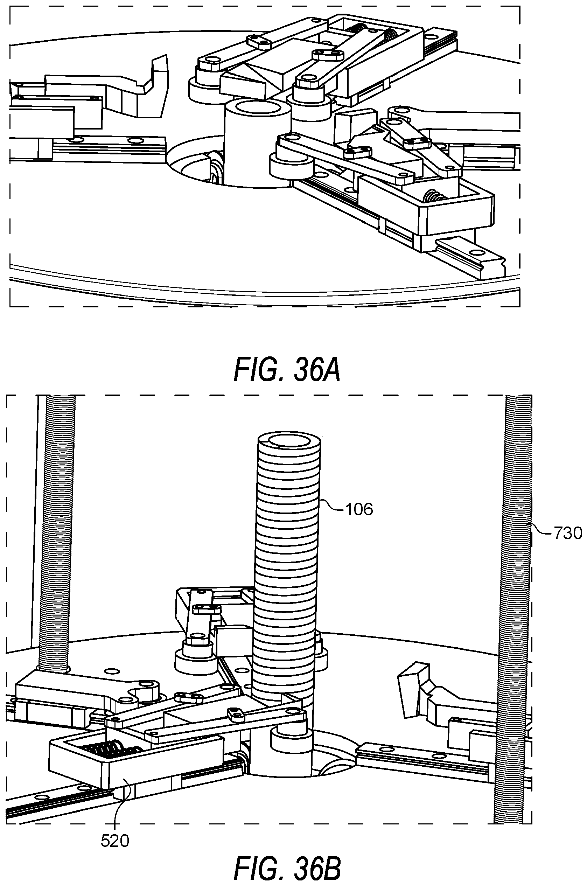

FIG. 36A is a partial top isometric top view of the cutting model of the system of FIG. 2A removing an insulation layer of a cable in a first configuration;
FIG. 36B is a partial top isometric top view of the cutting model of FIG. 36A in a second configuration;

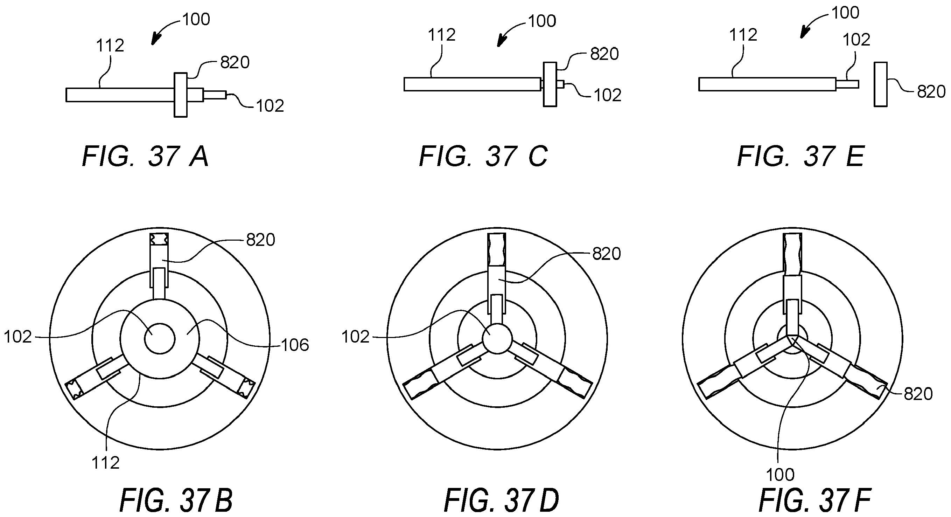

FIG. 37A-37F are schematic diagrams of a clamping module; FIG. 37B is a schematic diagram of a clamping module of the system of FIG. 2A engaged with a cable of a first diameter;
FIG. 37D is a schematic diagram of a clamping module of FIG. 37B engaged with a cable of a second diameter, where the second diameter is smaller than the first diameter of the cable shown in FIG. 37B;

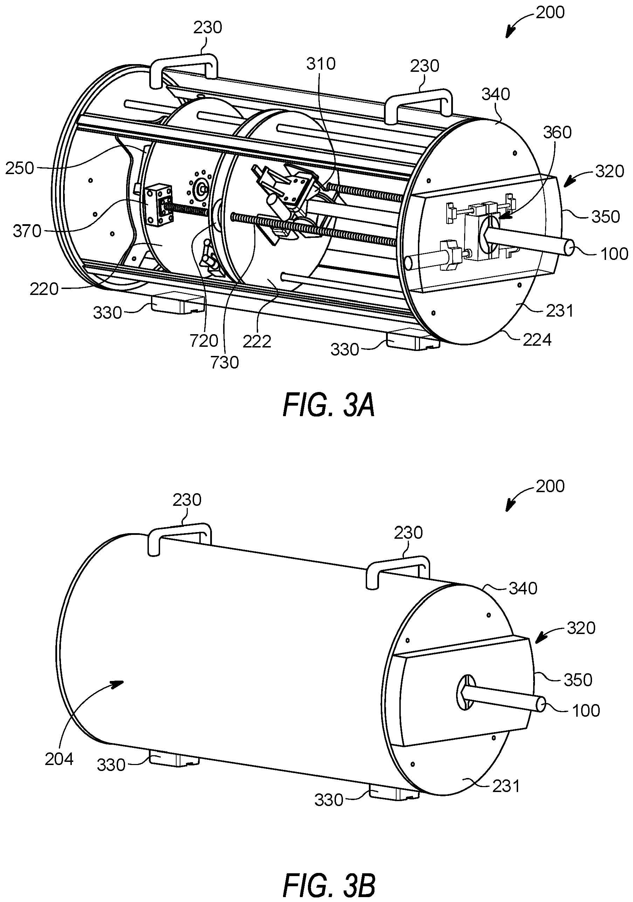

FIG. 37F is a schematic diagram of a clamping module of FIG. 3A engaged with a cable of a third diameter, where the third diameter is smaller than the second diameter of the cable shown in FIG. 37D;

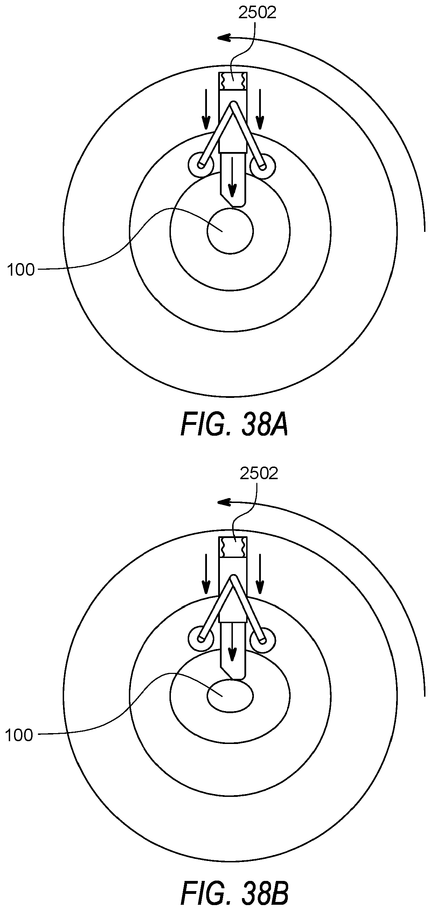

FIG. 38A is a schematic diagram of an alternative embodiment of the cutting module of the system of FIG. 2A provided in the form of a spring-loaded cutting tool rotating around a circular cable;
FIG. 38B is a schematic diagram the cutting module of FIG. 38A provided in the form of a spring-loaded cutting tool rotating around an abnormally shaped cable;

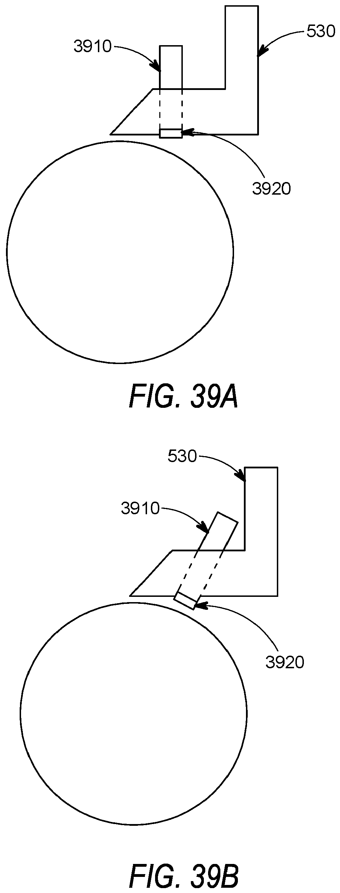

FIG. 39A is a schematic diagram of a sensor module integrated with the cutting module of the system of FIG. 2A, where the sensor is in a first orientation;
FIG. 39B is a schematic diagram of the sensor module of FIG. 39A, where the sensor is in a second orientation;

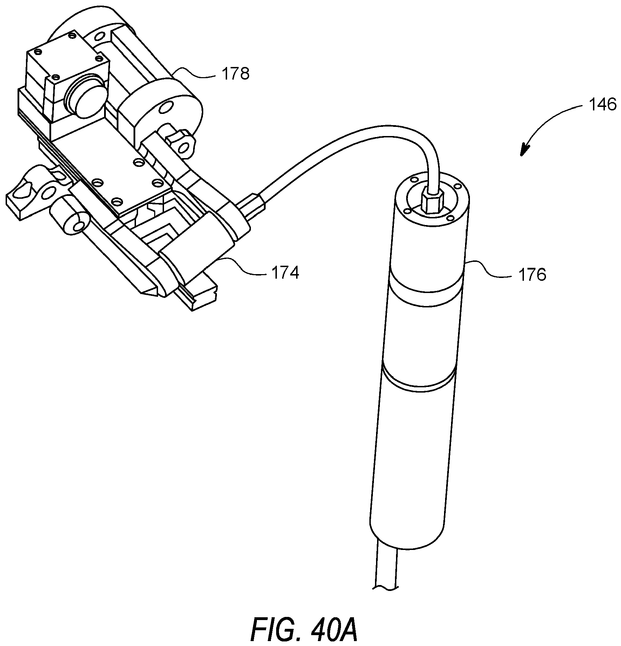

FIG. 40A is a top isometric view of a roller of a roller module of the system of FIG. 2A;

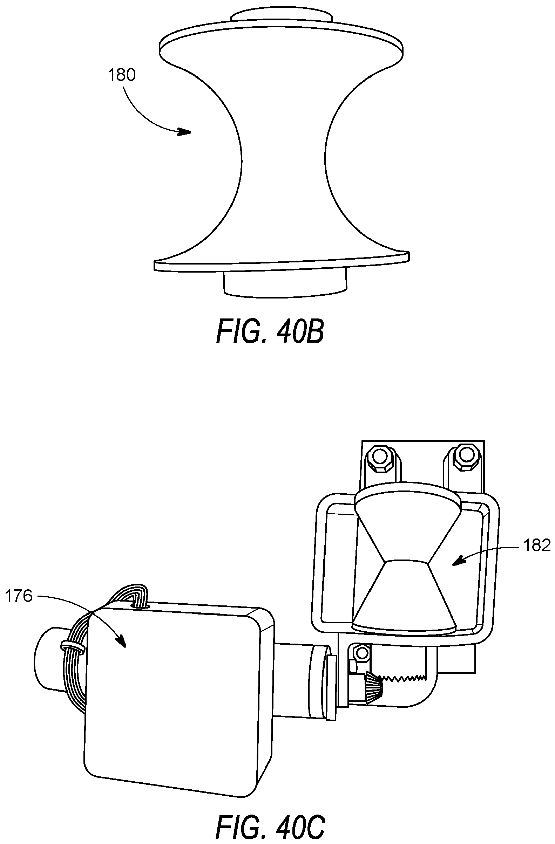

FIG. 40B is a top plan view of an alternative embodiment of the roller of FIG. 40A;
FIG. 40C is a top isometric view of an alternative embodiment of the roller of FIG. 40B;

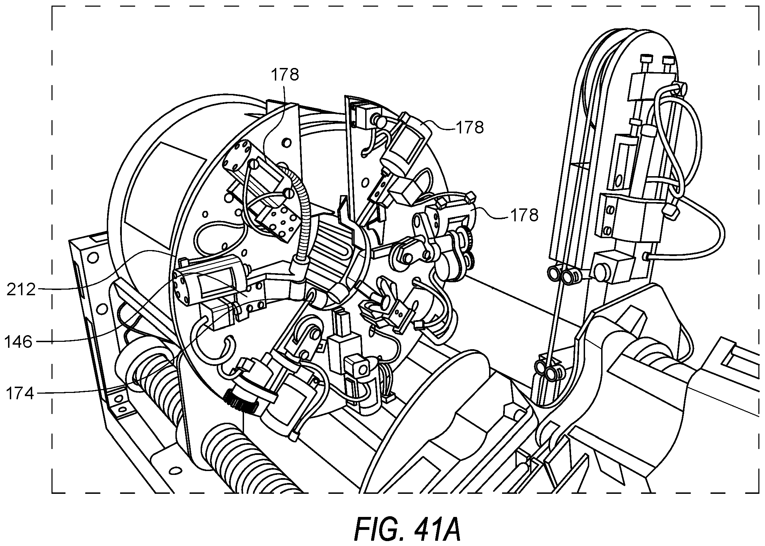

FIG. 41A is a side isometric view of a tool plate of the system of FIG. 2A with the roller of FIG. 40A;

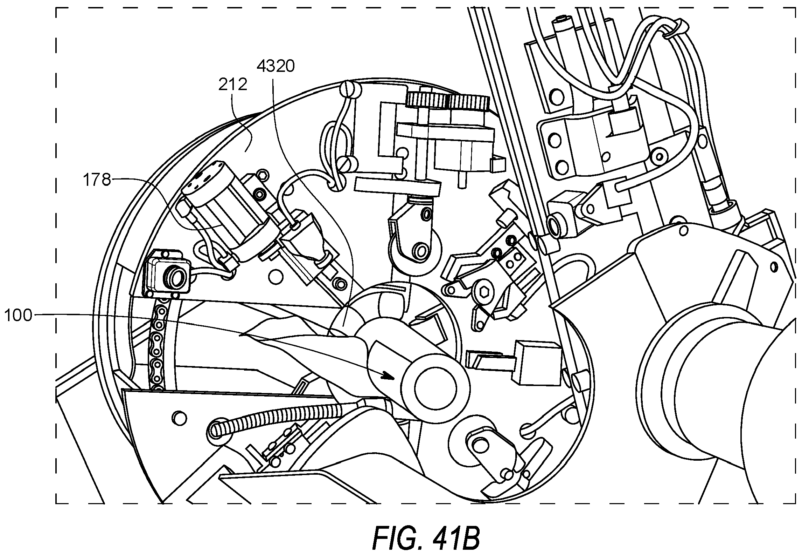

FIG. 41B is a front isometric view of a cable being processed with the tool plate of FIG. 41A;

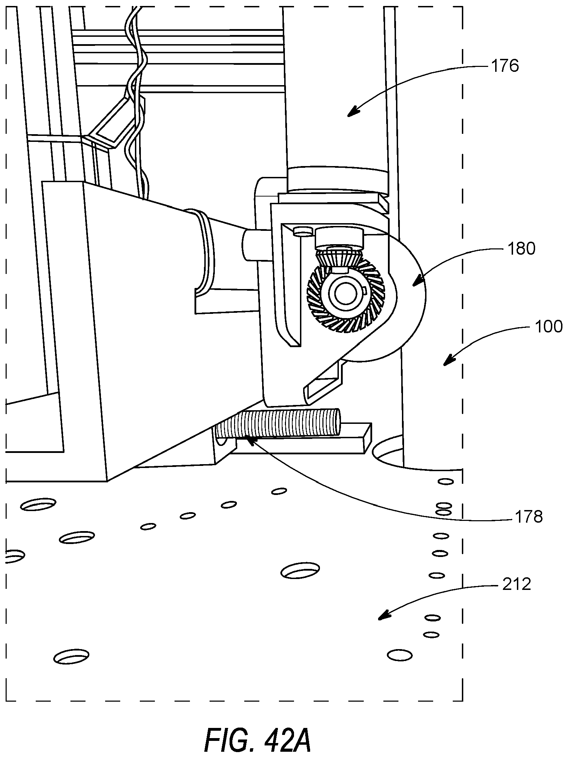

FIG. 42A is a partial side elevation view of the roller module with the roller of FIG. 40B;

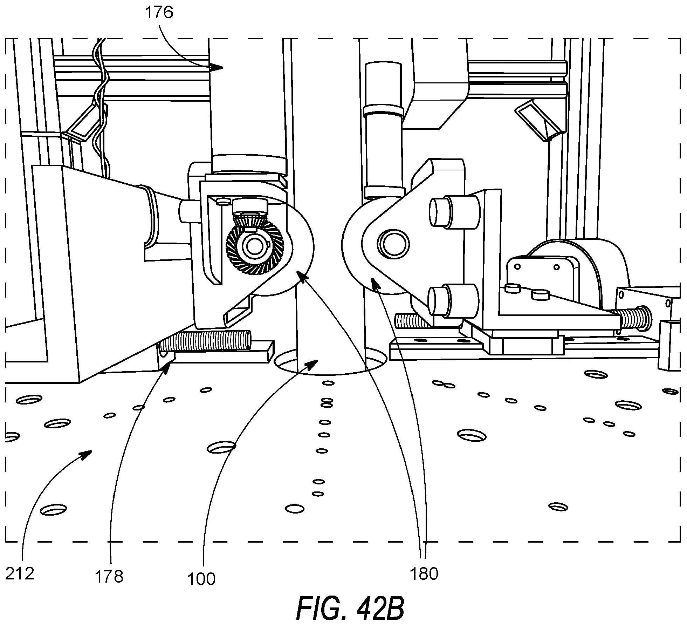

FIG. 42B is a partial front elevation view an alternative embodiment of FIG. 42A with two rollers of FIG. 40B;

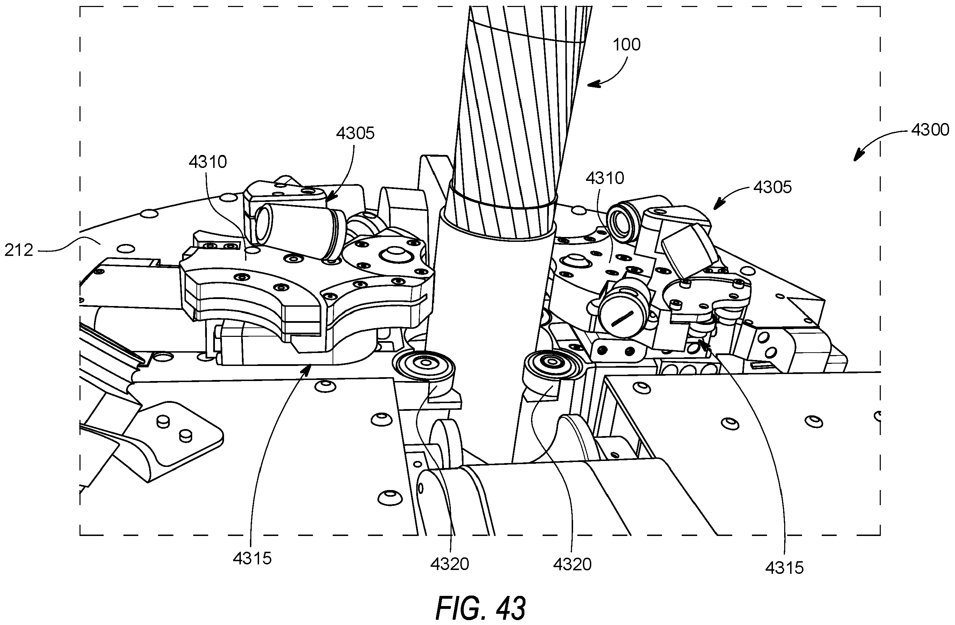

FIG. 43 is a partial top isometric view of tool turrets of the system of FIG. 2A;

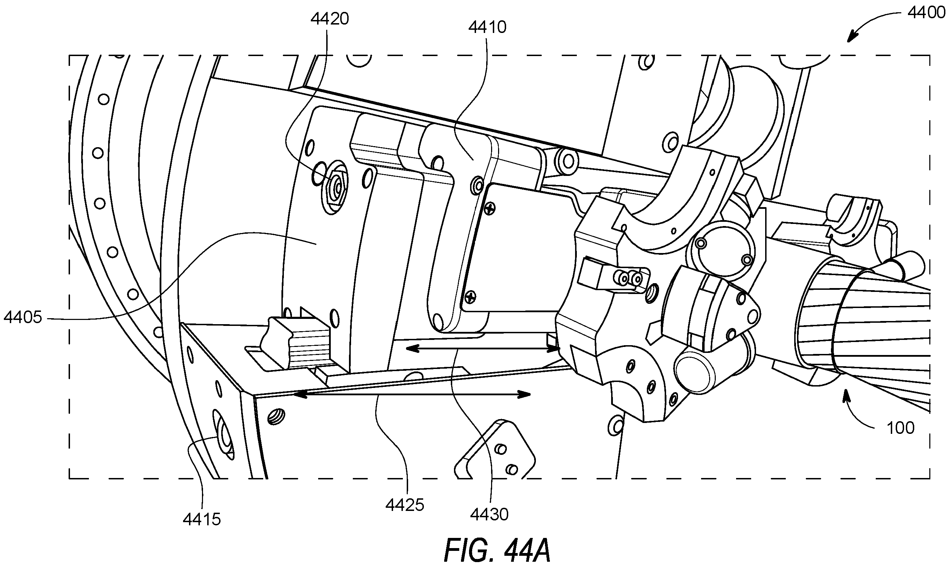

FIG. 44A is a partial enlarged front isometric view of tool deployment carriages of the system of FIG. 2A;

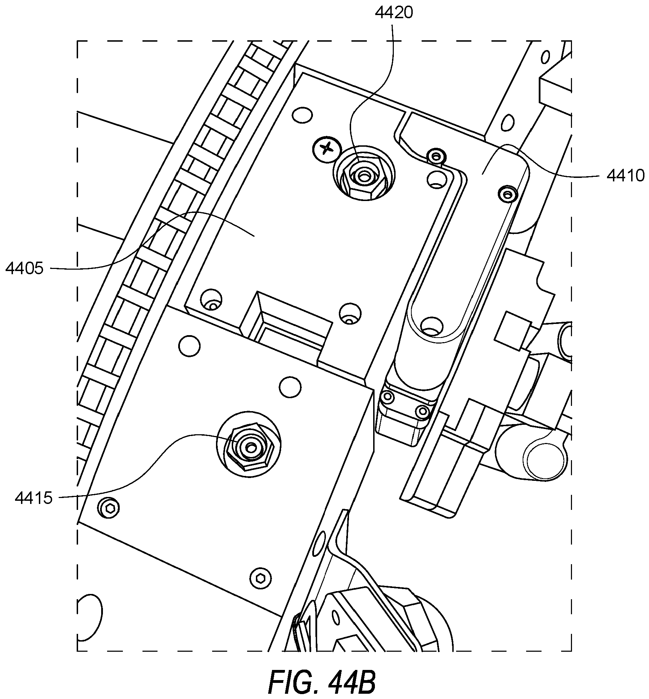

FIG. 44B is a partial enlarged side isometric view of the tool deployment carriages of FIG. 44A.

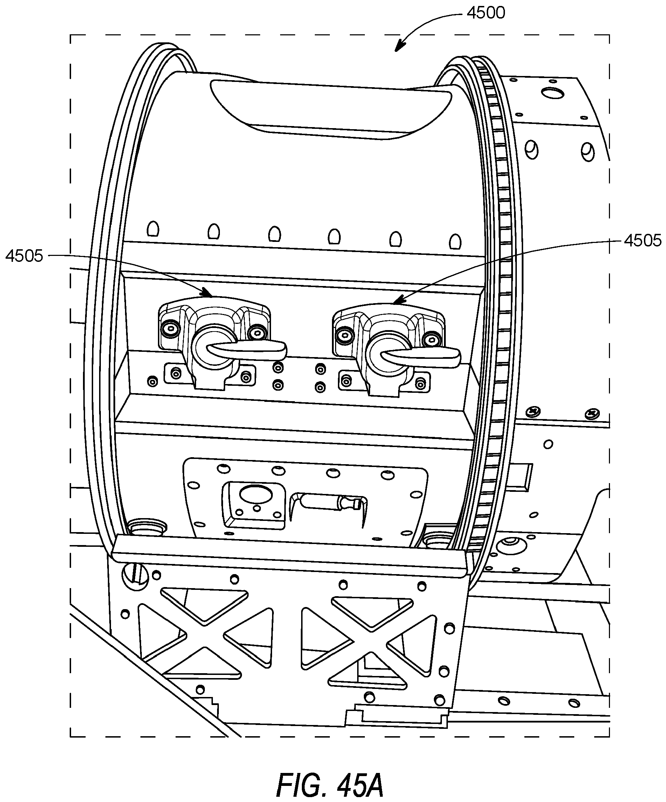

FIG. 45A is a side elevation view of a rotary drum of the system of FIG. 2A in a first configuration where the rotary drum is assembled;

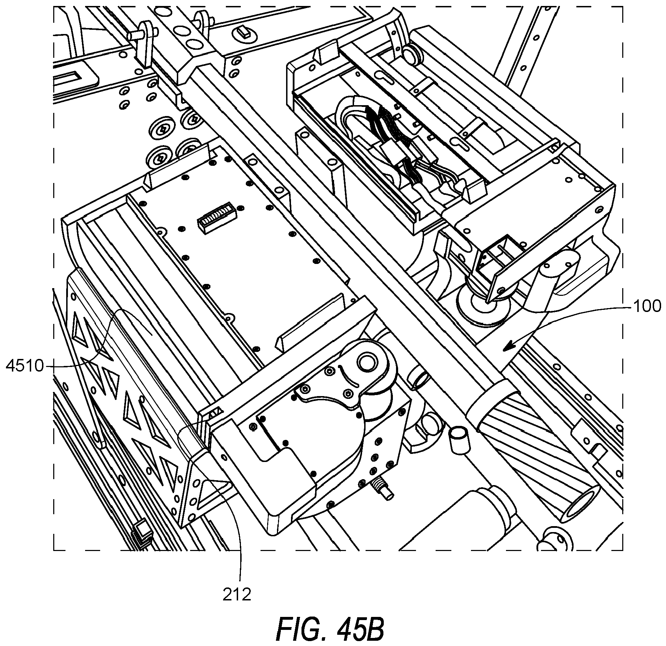

FIG. 45B is a top isometric view of the rotary drum of FIG. 45A in a second configuration where the rotary drum is disassembled;

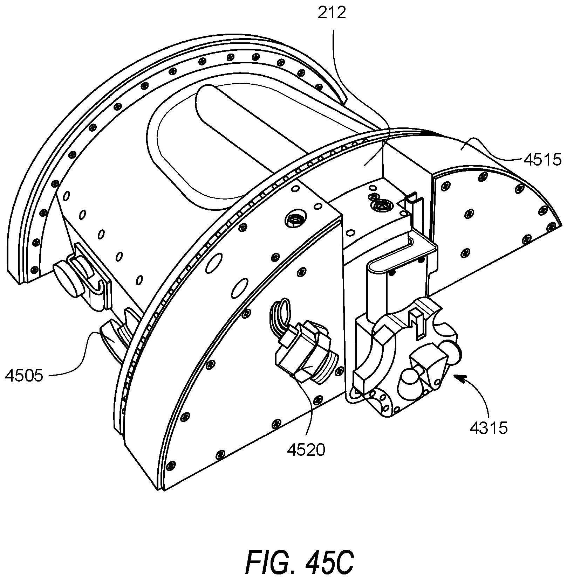

FIG. 45C is a top isometric view of a portion of the disassembled rotary drum of FIG. 45B;

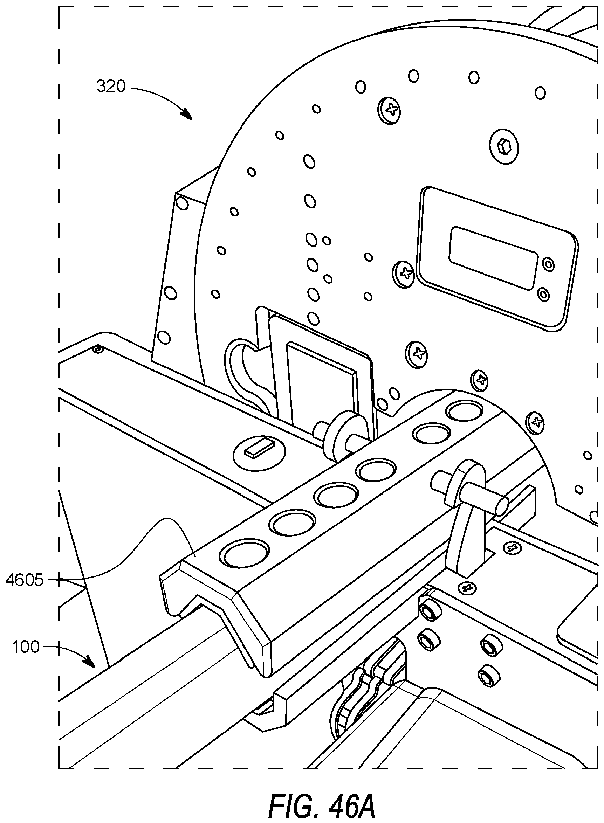

FIG. 46A is an enlarged front isometric view of an alternative embodiment of the clamping module of the system of FIG. 2A, in a first configuration.

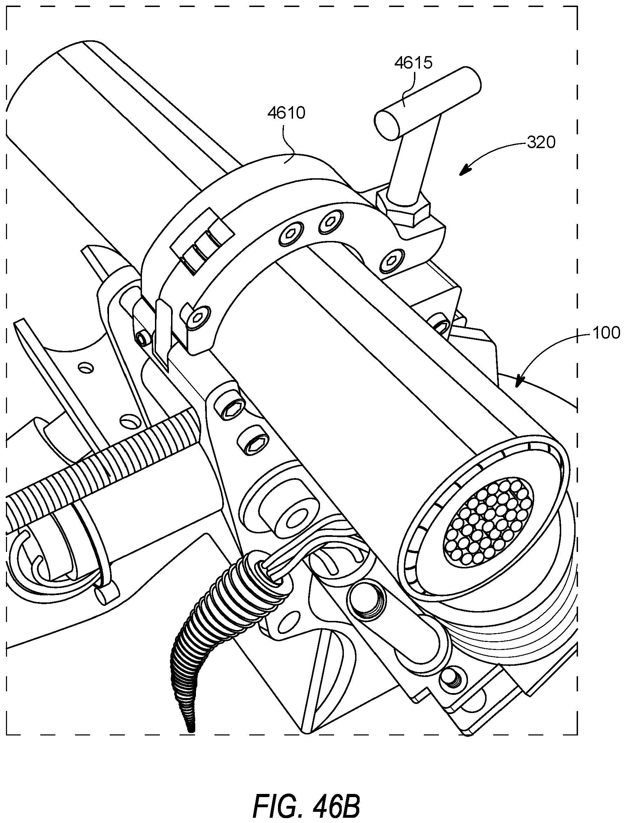

FIG. 46B is an enlarged front isometric view of an alternative embodiment of the clamping module of the system of FIG. 46A, in a second configuration;

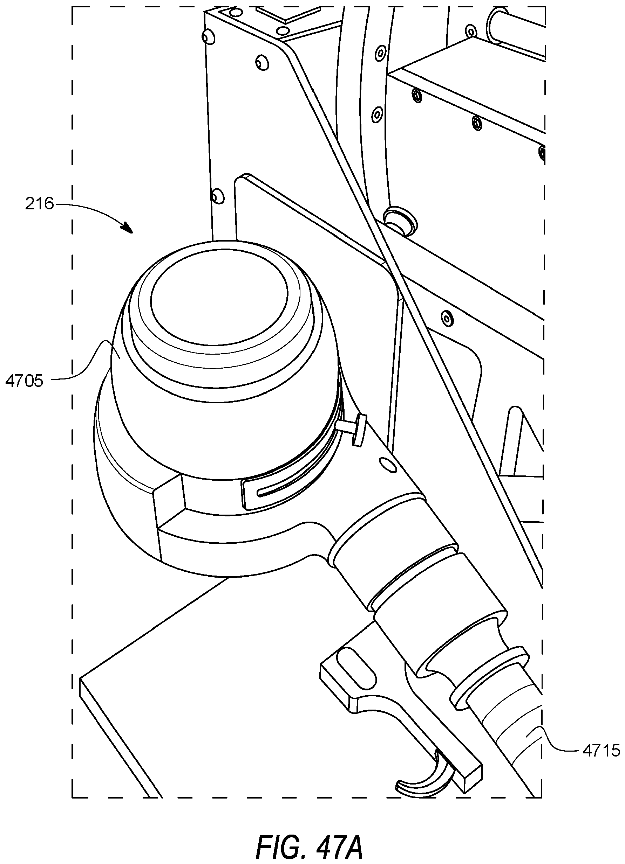

FIG. 47A is a top isometric view of a first portion of an alternative embodiment of a heating module of the system of FIG. 2A;

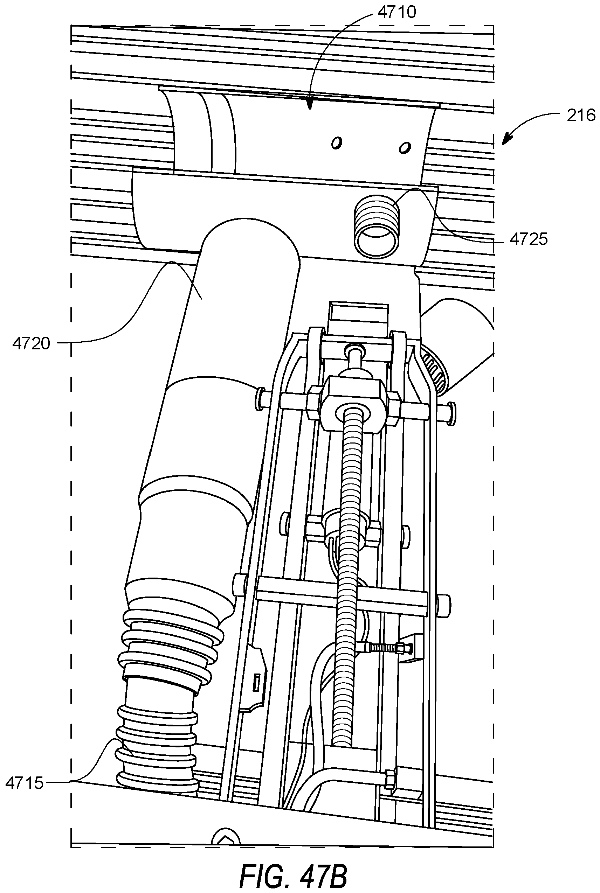

FIG. 47B is a top isometric view of a second portion of the alternative embodiment of the heating module of FIG. 47A; and

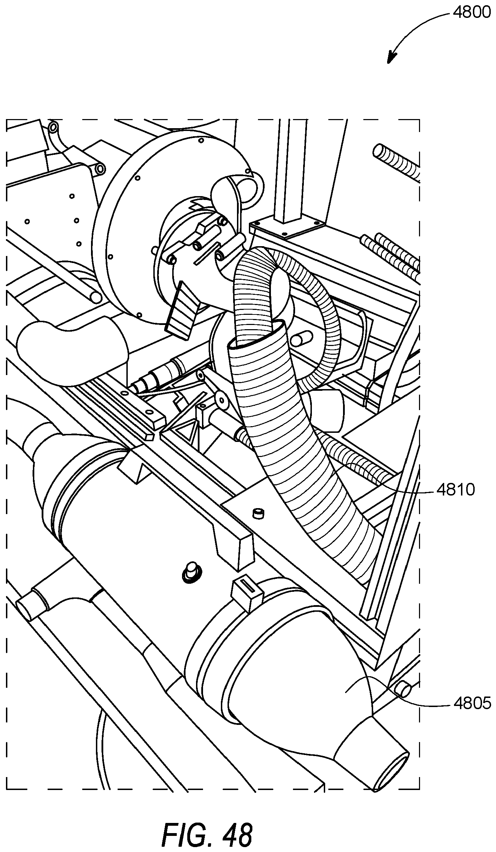

FIG. 48 is a top isometric view of a dust collection device used with the system of FIG. 2A.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the attached drawings. The invention is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

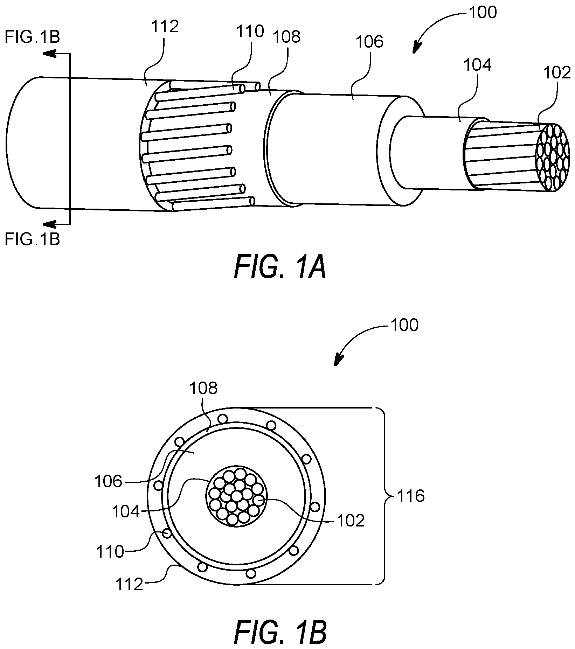

FIG. 1A illustrates an isometric view of a conventional electric semiconductor cable 100. The cable 100 may include a conductor 102, a conductor shield 104, an insulation 106 layer, an insulation shield 108, neutral wires 110, and a jacket 112. In some embodiments, the cable 100 may include a different number of and configuration of layers. In some embodiments, the style of cable to be used in the system described herein may include a round concentric neutral cable with XLPE insulation and a thick, peelable semiconductor layer. Other embodiments may include EPR insulated cables, EAM insulated cables, and other types and styles of cables, including but not limited to both bonded cables and cables with peelable semiconductor bonding.

In a typical semiconductor cable 100, the conductor 102 layer is the innermost layer of the cable and can be provided in the form of either solid or stranded copper or aluminum. In some embodiments, a stranded conductor 102 can provide additional flexibility over a solid conductor 102. In some embodiments, the conductor 102 is referred to as the "core." The conductor 102 is designed to carry current to the load and the size of the conductor 102, also referred to as the "gauge" of the conductor, is determined by the amount of current to be delivered. The conductor layer 102 can be cut at the beginning of the cable preparation process, before removing additional layers, or additional portions of the jacket 112 can be removed to expose additional length of the neutral wires 110, so the conductor 102 can be cut during the middle or end of the cable preparation process. In some embodiments, the "cutback length" for a termination is based on the measurement of where each layer is removed compared to the cut location for the conductor 102.

The conductor shield 104 can be provided in the form of a semiconductive layer between the conductor 102 and the insulation 106. The conductor shield 104 is designed to distribute an electric field to prevent corona discharge, which is typically extruded over the conductor 102. In some embodiments, the conductor shield 104 may be referred to as the inner shield or the inner semiconductor, or the inner semiconductor shield. In typical embodiments, the conductor shield 104 layer is removed when the insulation 106 layer is removed, usually as a single piece.

The insulation 106 layer can be provided in the form of a layer of thermoset, thermoplastic, plastic-like materials (e.g., XLPE), or rubber-like materials (e.g., EPR, EAM, etc.). The insulation 106 is typically designed with high dielectric strength to provide electrical insulation to the conductor 102 from the other layers and the surroundings. The thickness of the insulation 106 is selected based on the voltage rating of the cable 100 and calculations related to potential ground fault conditions. The insulation 106 layer and the conductor 102 layer are the largest contributions of the overall cable diameter 116 for a particular cable 100. The insulation 106 layer is typically removed by a spiral cut or a longitudinal cut using a blade.

The insulation shield 108 can be provided in the form of a semiconductive layer between the insulation 106 and the neutral wires 110. In some embodiments, the insulation shield 108 can be referred to as the outer semiconductor. The insulation shield 108, in addition to protecting the underlying insulation 106 layer, is designed to eliminate air gaps and imbalances that can lead to stress on the cable due to electric field concentrations. In at least this way, insulation shield 108 can be designed to distribute the electric field to reduce electrical stress on the insulation 106. The insulation shield 108 is typically a thin semiconducting material provided with either a "shaveable" or "peelable" bonding construction. The shaveable bond also referred to as "bonded", is typically harder since the bonding is fused to the underlying insulation 106. The bonded insulation shield 108 is removed by shaving down the layer and sometimes may require sanding. The peelable bonding is typically softer than the bonded insulation shield 108 and can be removed by scoring the insulation shield 108 layer with a square radial cut. The peelable insulation shield 108 layer can then be removed in longitudinal strips or as a spiral before being pulled away from the cable 100.

In some embodiments, the neutral wires 110 can be designed as a metallic layer (e.g., copper) that is grounded to confine or balance the electric field within the cable 100. In some embodiments, the neutral wires 110 can be referred to as the outer shield or the neutral shield. The neutral wires 110 can be provided in the form of loosely packed spiral strands with a circular cross-section, also referred to as concentric neutrals. In some embodiments, the concentric neutrals can be provided in the form of round concentric neutrals, which are small solid strand wires that spiral around the cable between the insulation shield 108 layer and the jacket 112 layer. Concentric neutrals are typically bent backward and/or twisted to provide a neutral connection. In some embodiments, the neutral wires 110 can be provided in the form of a spiral tape, also referred to as a tape shield. In some embodiments, the tape shield is a thin, solid shield that fully encapsulates the underlying layers of the cable 100. A tape shield is typically cut at a specified point to prepare the cable for termination. In some embodiments, the neutral wires 110 can be provided in the form of tightly packed spiral strands with a rectangular cross-section, also referred to as ground straps or flat straps. Flat strap neutral wires 110 are flattened metallic strips that spiral around the cable. Like the round concentric neutral wires 110, the flat strap neutrals are typically bent backward and/or twisted, rather than being cut. Examples of embodiments of automated manipulation of the neutral wires 110 are described herein.

The jacket 112 layer is designed to seal and protect all the inner layers of the cable 100 from environmental conditions, like debris and moisture. In some embodiments, the jacket 112 may be provided in the form of PVC, PP, or XLPE, and can either be a separate layer or partially bonded to the insulation shield 108 in some embodiments. The jacket 112 layer is typically removed by slicing through the layer and pulling the jacket 112 to remove it from the cable 100.

FIG. 1B is a cross-section view of a conventional electric semiconductor, like the one shown in FIG. 1A. Similar to the layers shown with respect to FIG. 1A, the cable 100 of FIG. 1B also includes the conductor 102, the conductor shield 104, the insulation layer 106, the insulation shield 108, the neutral wires 110, and the jacket 112. In some embodiments, the cable diameter 116, in addition to other cable parameters, can be automatically detected by the system and method described herein. The cable 100 may be connected to a wide variety of equipment, each of which may require a specific termination configuration. However, the cable 100 can be consistently prepared using the system and method described herein to be adapted for any type of cable termination required.

Some embodiments may include features and subassemblies suitable to process cables with a variety of cable parameters. In a non-limiting example, cable parameters can include insulation 106 material, insulation shield 108 material, temperature class, voltage class, eccentricity tolerance, outer jacket 112 material, conductor diameter 114, cable diameter 116, and other aspects of the cable 100 or portions thereof. In some embodiments, the insulation 106 material may include XLPE, XTRXLPE, EPR, or EAM with a typical thickness between 2.3 mm-11.3 mm, although other insulation 106 materials may be provided. In some embodiments, the insulation shield 108 material may include regular or bonded semi-conducting XLPE with a typical thickness of <1mm, although alternative insulation shield 108 materials may be provided. In a non-limiting embodiment, the temperature class of the cable 100 may be provided in the form of an MV90 or MV105 cable, although alternative temperature class embodiments may be provided. In a non-limiting embodiment, the cable 100 may be provided in the form of a 5kV-35kV cable with a 100%-133% insulation level, although alternative voltage class embodiments may be provided. In some embodiments, the insulation eccentricity will be provided at a maximum of 5% between the thinnest and thickest points of the insulation 106, however other insulation eccentricity values may be provided. In some embodiments, the outer jacket 112 material may be provided in the form of XLPE, PE, PVC, LLPE, or PUR, with a typical thickness between 1.5mm-3.8mm, however other outer jacket 112 materials may be provided. In a non-limiting embodiment, the cable 100 may have a conductor diameter 114 between #6 AWG (5mm) - 1500 kcmil (31mm), however other conductor diameters 114 may be processed/modified using the system and method described herein. In some embodiments, the cable 100 may be provided with a cable diameter 116 between 17mm-73mm, however other cable diameter 116 embodiments may be provided. Cable parameters can also include specifications related to the quality of the processed cable 100. For example, in some embodiments, the insulation surface roughness will be <25µm for cables with a bonded insulation shield 108. Further, other aspects of the cable parameters of the cable 100, environmental conditions, and/or construction specifications may be processed or modified by the system and method described herein.

FIG. 2A illustrates an embodiment of an advanced cable preparation system 200 designed to modify an electric cable, like the cable 100 shown in FIG. 1. The system 200 can be used for the method of removing or otherwise modifying one or more of the conductor layers of the cable 100, as described in connection with FIG. 1. The system 200 can include a housing 202 provided in the form of an outer frame 204, an aperture 205 designed to accept a cable 100, and one or more subassemblies 210, as shown and described in connection with FIG. 2B. In some embodiments, the aperture 205 can include a tethered cap, or similar, to prevent water or dust ingress through the cable opening when not in use. The illustration shown in FIG. 2A depicts the housing 202 with the sides partially removed for clarity.

FIG. 2B illustrates a non-limiting example of the subassemblies 210 In some embodiments, the subassemblies 210 can include, but are not limited to: a sensor module 206, a power module 208, and one or more subassemblies 210. In some embodiments, the subassemblies 210 may be provided in the form of one or more tools or devices mounted to one or more tool plates 212. In some embodiments, the one or more tool plates 212 may be provided in the form of a rotating plate, a linearly translating plate, a stationary plate, or any combination thereof. In some embodiments, the one or more plates can include a rotating base plate 220, a rotating/translating tool plate 222, and a stationary clamping plate 224. In some aspects, one or more tool turrets 4300 may be deployed on a rotating/translating tool plate 222, as described in more detail in connection with FIG. 43. Non-limiting examples of the one or more plates, including tools, devices, modules, and subassemblies coupled to the one or more plates, are described in more detail below.

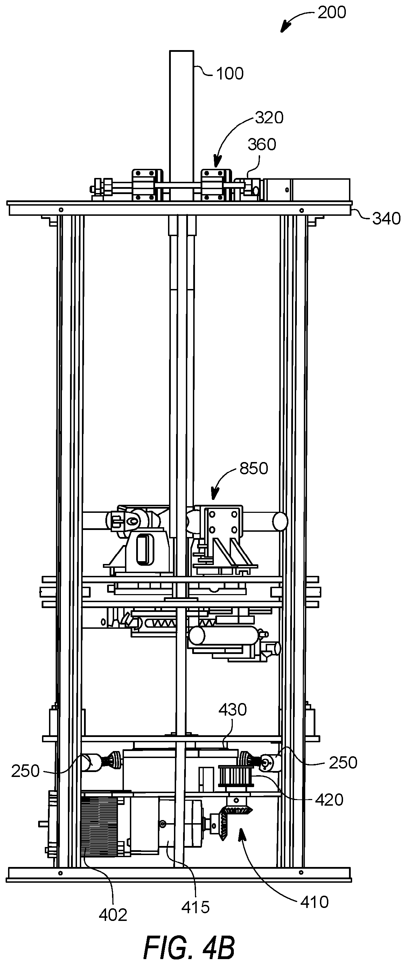

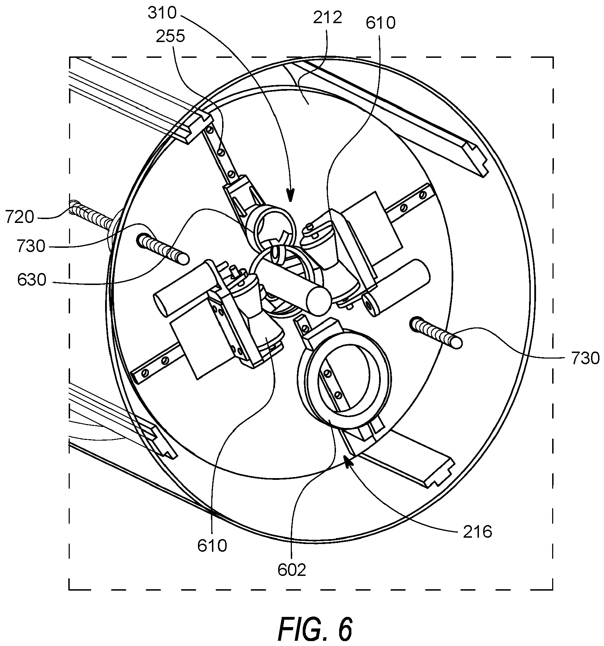

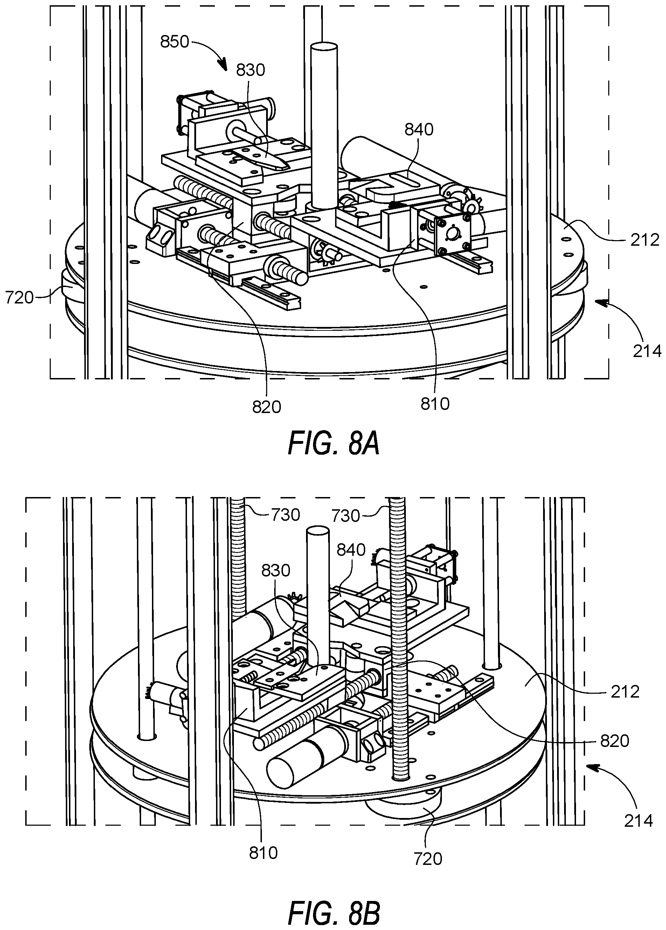

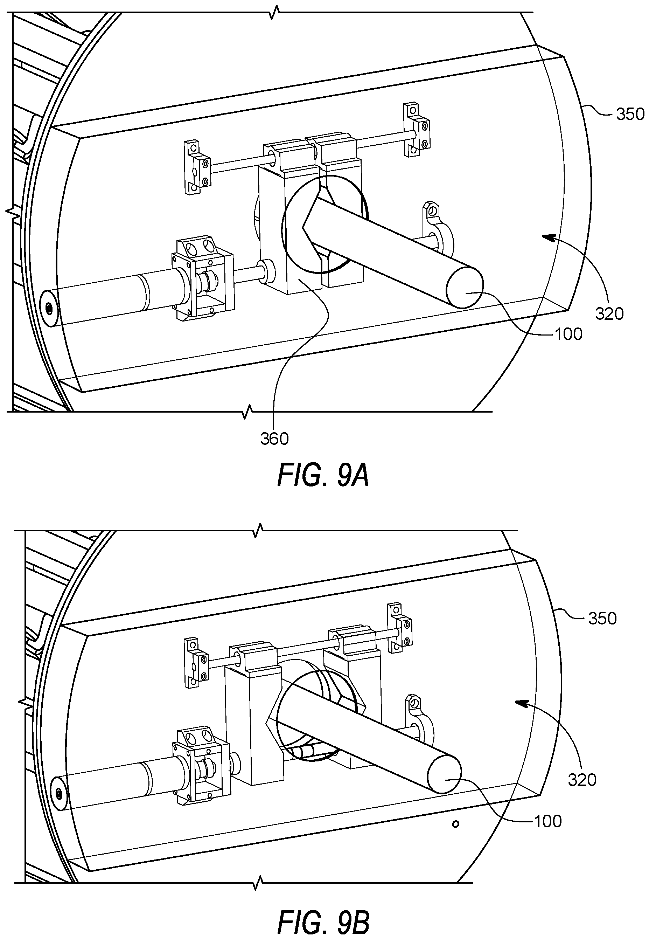

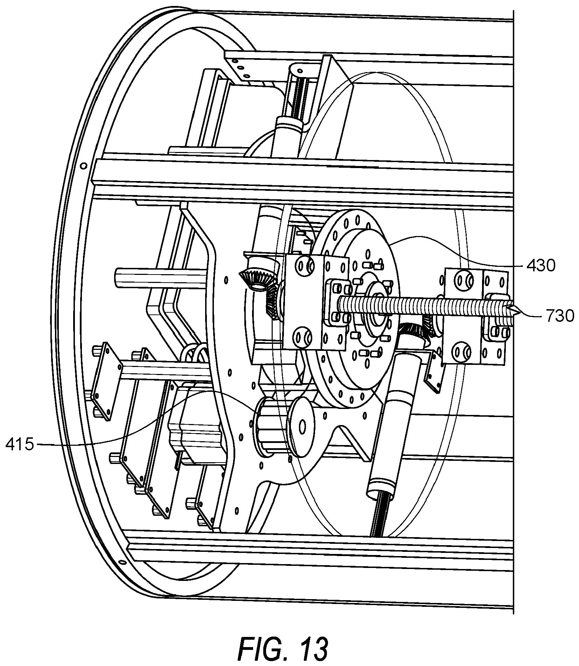

The subassemblies 210 can further include one or more of a cutting module 214, a heating module 216, a motor module 410 (see FIG. 4B), a roller module 310 (see FIG. 6), a clamping module 320 (see FIGS. 9A and 9B, for example), a sliding module 850 (see FIG. 8A, for example), a neutral handling module 1200 (see FIGS. 13A-31C, for example), a float module 244, a chip module 3600 (see FIGS. 34A-34C), a communication module 226, a processing module 228, a control module, an interface module 234, and a connection module 236. In some embodiments, the communication module 226, the processing module 228, and the control module 232 may be located within a housing for the power module 208, for example, although other locations and configurations may be provided. Additional modules and/or subassemblies may be provided in some embodiments.

The system 200 can comprise the housing 202 provided in the form of the outer frame 204, one or more handle devices, one or more flanges 231, and one or more access doors 235, or similar, to provide access to one or more of the subassemblies 210, modules, or components of the system 200. In some embodiments, the outer frame 204 may be constructed of plastic, metal, or other durable material. The one or more handle devices may be provided in the form of handles, holding points, handling devices, handholds, straps, carrying devices, carry points, or similar. In some embodiments, the entire system 200 is designed to be portable by a single operator. The housing 202 can include one or more flanges 231 for mounting the system 200, coupling subassemblies 210 or accessories, or similar. The housing 202 can include access doors 235 removably coupled to one or more of the exterior faces of the housing 202. In some embodiments, the access doors 235 are provided in the form of latched openings to provide access to the power module 208, batteries, and/or other internal components of the system 200. Additional access doors or coverings may be provided to allow for convenient access to one or more components that may need to be changed, removed, or replaced frequently. In at least this way, an operator is not required to disassemble the system 200 for routine maintenance procedures. In some embodiments, the subassemblies 210 and/or individual components may also be enclosed by one or more casings within the overall housing. Further, additional subassemblies and/or components may be connected to, or otherwise, coupled to the system 200 (e.g., plug-and-play devices), which may also be contained within separate casings. In some embodiments, the system 200 may further include an accessory module to integrate one or more plug-and-play devices.

The advanced cable preparation system 200 further includes the sensor module 206. In some embodiments, the sensor module 206 may be provided in the form of a sensor suite including a plurality of sensors designed to collect various types of data including, for example, data related to the cable parameters described in connection with FIG. 1, data related to the operational characteristics of the cable preparation system 200, data related to the length of cable and/or the number of cables processed, maintenance data, and other types of data. The sensor module 206 can include multiple sensors of different types. In some aspects, the sensor module 206 can include a pressure sensor, a heat sensor, an IR sensor, a hall sensor, an encoder, a voltage sensor, a current sensor, a camera, a LIDAR sensor, a GPS, etc. In some embodiments, the sensor module 206 can be used in an advanced data collection process. In some embodiments, the sensor module 206 may also be configured to monitor the status of the subassemblies 210 of the advanced cable preparation system 200. In some embodiments, the sensor module 206 can communicate with the control module 232 and processing module 228 (and other subassemblies) to adjust one or more of the subassemblies 210 and/or modules in response to detecting or determining one or more cable parameters. In a non-limiting example, when the sensor module 206 detects the type of cable 100 introduced to the system 200, the sensor module 206 can communicate with the control module 232 to adjust a blade depth adjustment tool 810 in the cutting module 214 (described in more detail in connection with FIGS. 8A and 8B) and initiate the heating module 216, for certain cable 100 types. In some forms, the sensor module 206 can be provided in the form of an encoder and/or a hall sensor that is used to determine a level of engagement for the clamping module 320 and/or a tool cutting depth for the cutting module 214.

In some embodiments, the power module 208 can include one or more batteries. In some embodiments, the batteries are provided in the form of swappable lithium-iron battery packs (e.g., Milwaukee MX Fuel XC406 battery pack). Other power sources may be used, including but not limited to other types of batteries, hard-wire power, hydraulic, pneumatic, wireless power bank, fuel, etc. The batteries may be rechargeable and/or removable to facilitate charging. In some embodiments, the power module 208 is designed to provide at least one hour of continuous operation on a single charge. In some embodiments, the power module 208 may be external to the housing 202. In some embodiments, the power module 208 can include power electronics. In some embodiments, the power module 208 may be mounted to an exterior face of the housing 202.

The system 200 can also include the communication module 226 with one or more antennas or other forms of communication disposed on or within the housing 202. In some embodiments, the communication module 226 can include antennas, Bluetooth, satellite, cellular, Wi-Fi, internet, or other communication protocols. In some embodiments, the communication module 226 may include one or more ports for connecting other types of devices, such as a plug-and-play device, and/or one or more ports for connecting devices, like a USB device or HDMI, in a non-limiting example. It will be understood that the communication module 226 is designed to communicate and transmit information between the different modules of the system 200, and also communicate with third-party applications and systems. In some aspects, the communication module 226 may be configured to connect to one or more networks, cloud servers, or other computing devices.

In some embodiments, the processing module 228 can be provided in the form of an onboard processor and memory unit. Additional processors or other processing components may also be used in some embodiments. The processing module 228 allows for efficient onboard processing of the data collected by the sensor module 206 and other subassemblies 210. In some embodiments, the processing module 228 is in direct communication with the interface module 234 to display information and process data, in addition to receiving user inputs. The processing module 228 Additional processing and post-processing methods are also contemplated.

The system 200 further includes the control module 232. In some embodiments, the system 200 may be autonomous, semi-autonomous, or remotely controlled by an operator or other control system. The control module 232 may also include other components or devices (e.g., cameras, sensors, etc.) designed to allow the system 200 to automatically locate a cable 100, align the system to prepare the cable 100, and initiate the cable preparation processes and method described herein. In some embodiments, the system 200 can be configured to automatically locate the end of the cable as the system 200 is installed and aligned on the cable 100. The control module 232 may also include other components or devices designed to allow the system 200 to traverse a surface (e.g., road, grass, field, forest, rocks, and other terrains) including, but not limited to a motor, motor controls, motor driver, steering device, etc. In at least this way, the system 200 may be provided in the form of a robotic platform.

In some embodiments, the control module 232 can include a controller designed to execute programmable instructions, including the processing methods completed by the processing module 228. In some embodiments, the control module 232 can also include, or otherwise be in communication with an adjustment module 242, used to analyze and self-diagnose discrepancies in the cable preparation system 200. In some embodiments, the adjustment module 242 may use machine learning, artificial intelligence, or similar, to iteratively train one or more models and improve the performance of the system 200 based on one or more feedback parameters, characteristics, or similar. In some embodiments, the control module 232 may be activated by one or more switches. In other embodiments, the control module 232 may automatically activate when a cable 100 is detected to have entered the system 200 by the sensor module 206, or when triggered by a remote control, mobile application, or the interface module 234. Other types of system initiation are also contemplated.

In some embodiments, the interface module 234 may include a digital display provided on the cable preparation system 200. The interface module 234 can further include one or more LEDs, indicators, icons, display configurations, or similar. The interface module 234 can also include a computing device or computer display. The interface module 234 may include one or more displays for displaying the output of the processing module 228 and associated post-processing methods. In some embodiments, the interface module 234 may display the battery life, the system 200 status, the current operation being performed, and the estimated time until the cable preparation method is complete. In some embodiments, the following operational states can be displayed via the interface module 234: disarmed, armed/ready, removing outer jacket, manipulating outer shield, removing insulation shield, removing insulation, complete, error (including the error code and an associated description). Other operational states and messages are contemplated. In some aspects, the interface module 234 may generate one or more outputs to be displayed on one or more displays.

The interface module 234 may also accept user input so the data and output information can be manipulated, edited, or modified during processing. In some embodiments, the interface module 234 can be configured with drop-down menus or similar pre-populated options for selecting one or more cable parameters or job specifications to configure the system 200. In some embodiments, an operator's preferences can be stored in a memory unit as part of the operator's user profile. In some aspects, the operator's user profile can be identified and/or configured during an authentication process. The interface module 234 can also include a mobile application and/or one or more remote control devices for controlling the system 200 and/or individual subassemblies 210.

In some embodiments, the connection module 236 can be provided in the form of one or more plugs, ports, cables, or other types of connective devices. In some embodiments, the system 200 may also include one or more jacks for connecting to external devices. In some embodiments, the connection module 236 can include both wired and wireless connections between the subassemblies 210 of the system 200 in addition to connections to third-party or external computing devices or systems. In some embodiments, the connection module 236 can communicate with the interface module 234 or an external display device to indicate if the system 200 is not properly operating or not operating at all (e.g., not installed on a cable). In some embodiments, the system 200 includes dynamic and scalable data collection, processing, and storage features to allow for efficient integration with third-party systems for several applications.

Some embodiments can also include one or more labels (not shown) on the housing 202. In some embodiments, the labels may be used for marketing purposes, such as a company logo. In some embodiments, the labels may be used to convey other information, like technical data related to the robotic platform and its operation, maintenance, and/or features.

In some embodiments, the system 200 can include one or more GPS module(s) 238, localization modules 240, or similar location-sensing devices. In some embodiments, the information and data collected by the location-sensing devices are used by the processing module 228 to determine the location of the system.

As shown in FIGS. 3A and 3B, the system 200 can include multiple handle devices 230 and can also include mounting points 330, legs, wheels, tracks, or other forms of support for the system 200. In some embodiments, the mounting points 330 may be provided in the form of movable supports. In some embodiments, the mounting points 330 may be provided in the form of stationary legs. While two handle devices 230 and two mounting points are shown in FIG. 3B, other configurations and quantities of handle devices 230 and mounting points 330, or supports, are possible.

In some embodiments, the clamping module 320 can be provided in the form of a rigid clamp (see FIGS. 9A and 9B) removably coupled to an exterior rear plate 340 of the housing 202. In some embodiments, the clamping module 320 can be covered by a rigid clamp cover 350. In some embodiments, the clamp cover 350 may be hinged or removably coupled to the rear plate 340 of the housing 202 and/or to the clamping module 320. In some embodiments, the clamping module 320 can include a device for creating an environmental seal when the clamping module 320 is initiated. In some embodiments, the clamping module 320 can communicate with the sensor module 206 and/or the control module 232 to detect whether or not the clamping module 320 has been activated and/or is properly sealed. In some embodiments, the sensor module 206 can communicate with the control module 232 to initiate one or more actions in response to detecting the clamping module 320 is not properly engaged or that there is a leak in the seal, or similar. The rigid clamp can be engaged anytime the cutting module 214 is activated, including when the cutting module is cutting the cable 100.

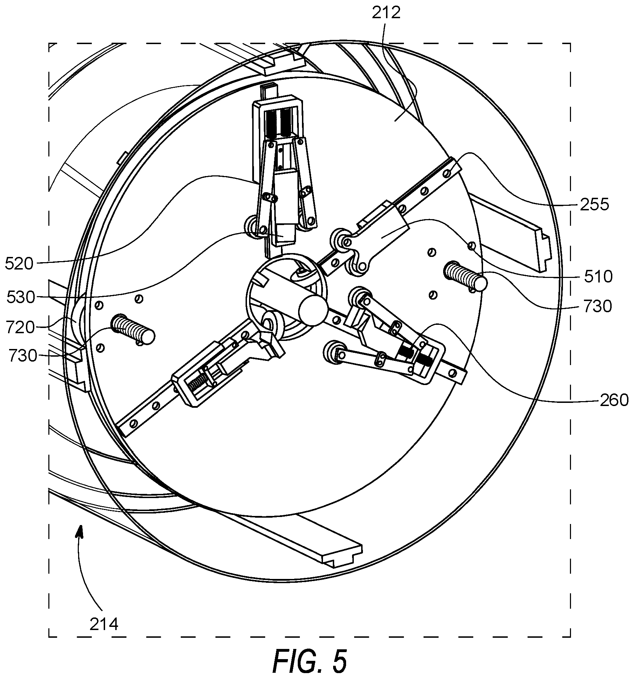

In some embodiments, the cutting module 214 can include one or more blades 530 or other types of cutting devices. In some embodiments, aspects of the cutting module 214 can be mounted on one or more tool plates 212, as shown in FIG. 5 for example. In some embodiments, one or more cutting devices can be provided in the form of one or more cutting and scoring tools 520. In some embodiments, the cutting and scoring tools 520 can be actuated to engage with the cable 100 during the cable preparation method. In some embodiments, the cutting and scoring tools 520 can be motor-driven, spring-loaded, or otherwise dynamically actuated. In some embodiments, aspects of the cutting module 214 can be provided in the form of movable or dynamic tools that can be controlled with the motor module 410 and/or the control module 232. In some embodiments, the cutting module 214 can cut from the end of the cable inward, or from the middle of the cable towards the end. In some embodiments, one or more cutting devices can be configured to cut in both directions, depending on the specific cable parameters, job specifications, or other factors.

In some embodiments, the cutting module 214 can include an angled blade, a scoring blade, a saw, a straight blade, an ultrasonic knife cutter, a custom lift blade tool, a radial blade, and other types of cutting devices and blades. In some embodiments, one or more blades or cutting devices can be used in combination to accomplish specific tasks in the cable preparation method (e.g., an additional blade behind the main cutting blade can be used to slice up removed layer(s) as part of the chip module 3600).

FIG. 6 provides an example tool plate with an embodiment of the heating module 216 and the roller module 310 installed. In this embodiment, the heating module 216 is provided in the form of a cable heater 602. In some embodiments, the heating module 216 can include heat plates, one or more cable heaters 602, one or more IR heaters 702, ceramic heaters, heat guns, heating elements, heating pads, hot plates, or other types of heating devices. The heating module 216 can include multiple types of heating devices in some embodiments. In some embodiments, the heating module 216 can automatically adjust the type of heat and the heat level according to the cable type detected by the sensor module 206. For example, a cable 100 with a thicker cable diameter 116 may require more heat than a smaller diameter cable 100. In some embodiments, the heating module 216 can be controlled by the control module 232. In some embodiments, the heating module 216 can include an IR sensor or other temperature sensor to determine the internal temperature of the system and/or the temperature of the cable. In some embodiments, the temperature sensor can communicate with the control module 232 (or another subassembly) to automatically adjust the heating module 216. In some aspects, the heating module 216 may include one or more heating devices to heat an ambient temperature of an area surrounding the cable 100 or otherwise surrounding the cable 100. In some embodiments, the heating module 216 may be activated to heat a surface of the cable 100 before the preparation processes, between processes, after processes, or a combination thereof.

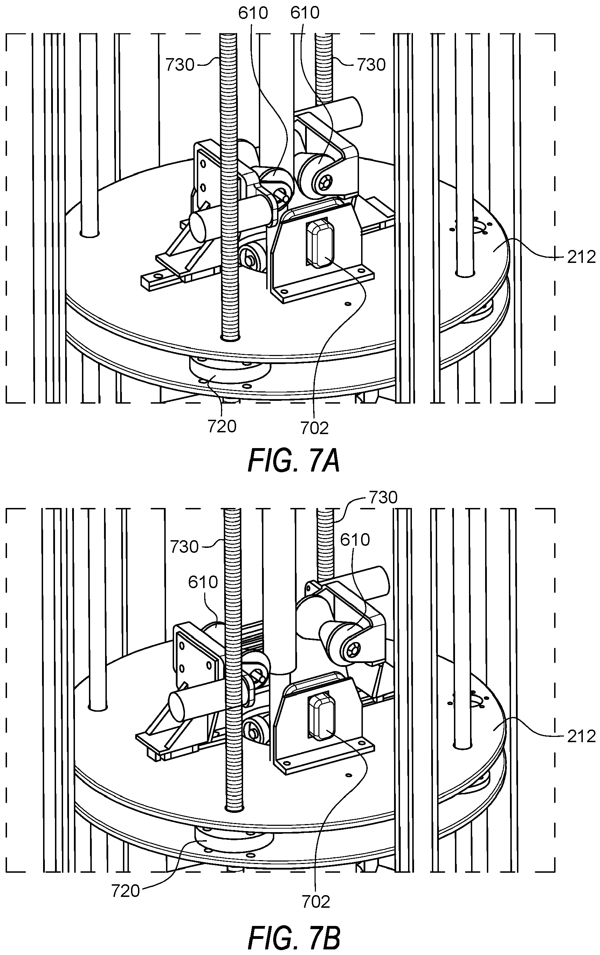

FIG. 7 illustrates an alternative embodiment of the heating module 216 installed on a tool plate with the roller module 310. In this example, the heating module 216 is provided in the form of one or more IR heaters 702.

In some embodiments, the roller module 310 can include one or more rollers and is designed to contact the cable 100 facilitate the removal of one or more layers using friction. The one or more rollers can be provided in the form of a metal alloy, polymer, ceramic, or similar material, finished in a smooth, or relatively smooth surface. As the rollers engage with the cable 100, the rollers can peel away the semiconductor layer (i.e., insulation shield 108) and/or other layers at different stages of the cable preparation process. In some embodiments, the rollers may be provided in the form of fitted rollers as shown in FIGS. 40A and 40B. In some embodiments, the rollers may be provided in the form of a V-groove roller 182 (see FIG. 40C) to dynamically accommodate different cable diameters and interface with cables of varying sizes and parameters. Other shapes and configurations of rollers are also contemplated including multiple shapes, sizes, textures, finishes, etc. Multiple roller configurations can be used with the advanced cable preparation system 200 to improve performance, processing efficiency, and accuracy, based on the cable parameters of the specific cable 100 being processed.

In some embodiments, the roller module 310 may include one or more guides for centering the cable 100 within the one or more rollers. In some embodiments, the rollers can be used in conjunction with one or more cable supports 510 to help align the cable 100 as it proceeds through the cable preparation process. In some embodiments, the clamping module 320 may be deactivated or otherwise disengage during a portion of the rolling process.

In some embodiments, as shown in FIGS. 8A and 8B, the cutting module 214 can further include one or more scoring tools or scoring blades 830, an insulation blade 840, a blade depth adjustment tool 810, and a clamp device 820 to stabilize the cable 100 during the operation of the cutting module 214. In some embodiments, one or more of the components shown in FIGS. 8A and 8B can also be incorporated and/or installed on a tool plate with the components shown in FIG. 5. In some embodiments, the blade depth adjustment tool 810 can be automatically adjusted based on a detected diameter of one or more of the layers of the cable 100, as determined by the sensor module 206, the adjustment module 242, or a combination thereof. In some embodiments, the automatic adjustment of the blade depth adjustment tool 810 can be controlled by the control module 232, the adjustment module 242, or a combination thereof. In another embodiment, the cutting module 214 may include a separate controller and/or processor for automatically adjusting and/or configuring the cutting tools and cutting devices.

In some embodiments, the tool plate shown in FIGS. 8A and 8B (or other tool plates) can include a sliding plate module 850. The sliding plate module 850 can provide an additional way to improve consistency in varying scenarios by allowing the tools or clamp device(s) to slide freely in one or two degrees of freedom. This freedom of motion allows the clamp to be adjusted to align with the center of the cable 100, without having to force the cable 100 into compliance.

As shown in FIGS. 9A, and 9B, for example, the clamping module 320 can include one or more clamping devices designed to provide support and alignment to the cable 100 during the cable preparation processes described herein. In one embodiment, the clamping module 320 can include a first clamp device 360, located at a point where the cable 100 exits the system 200. In some embodiments, the first clamp device 360 can be provided in the form of a rigid (e.g., fixed) clamp device, as shown in FIGS. 9A and 9B. In some embodiments, the clamping module 320 may further include a second clamp device 820, provided on one or more of the tool plates as shown in FIGS. 8A and 8B. In some embodiments, the second clamp device 820 may be used to dynamically support and align the cable 100 within a center axis of the system 200. In some embodiments, the clamping module 320 engages with the cable 100 using one or more drive wheels coupled to the cable and the clamping module 320 can automatically adjust alignment based, at least in part, on the cable diameter, for many different cable diameters, as shown in FIGS. 37A-37C, for example.

In some embodiments, the clamping module 320 can communicate with the sensor module 206 to automatically adjust a position and setting of the one or more clamping devices based on a detected cable diameter. In some embodiments, the clamping module 320 can include spring-loaded (e.g., passive) clamping devices, motor-driven (active) adjustable clamping devices, manually adjustable clamping devices, or a combination thereof. In some embodiments, the clamping module 320 can be provided in the form of moving or movable clamps between one or more tool plates. In some embodiments, the clamping module 320 can be provided in the form of localized opposing clamp devices for one or more tools or subassemblies 210. In some embodiments, the clamping module 320 can include a swivel plate mount or a float module 244 to allow the tool plate to move in any direction while maintaining the cable's center of rotation and consistently holding the blade of the cutting module 214 at a consistent angle. The swivel plate mount is designed to allow the tool or clamping module 320 to be "swiveled" by a few degrees in any direction to allow for proper engagement with a cable 100. The swivel plate mount can help facilitate a secure grip on the cable 100 even when the cable 100 is bent, curved, or held at an angle within the system 200. The float module 244 can coordinate with the clamping module 320 and/or the swivel plate mount to improve cutting consistency. The float module 244 includes two plates above the main tool plate 212. Each of the two float module plates includes a set of linear rails positioned 90 degrees apart, allowing the bottom plate to move freely linearly left to right while the top plate moves forward and back, providing two degrees of freedom. The clamping module 320 can be mounted to the top of the float module 244 in some embodiments, allowing for the clamping mechanism to utilize two degrees of freedom. In some aspects, one degree of freedom can be used with only one additional plate to improve the cutting consistency. It will be appreciated that the clamping module 320 can include any combination of the clamping devices described herein, and other configurations of clamping, support, alignment, stabilization, and similar devices are contemplated.

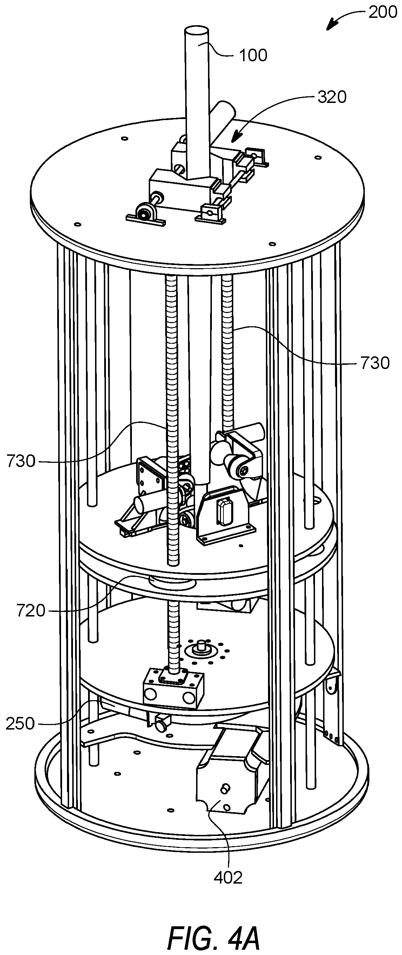

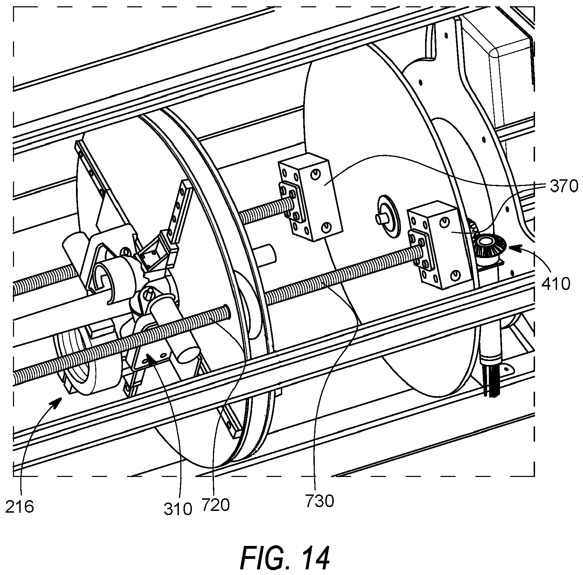

The motor module 410 can include one or more motors to complete one or more of the primary tasks completed by the advanced cable preparation system 200. In some examples, the motor module 410 can include one or more linear motors 250 for linearly driving the one or more plates in the system. In some embodiments, the linear motor 250 can be provided in the form of a dual-drive motor. In some embodiments, the motor module 410 can include one or more of a gearbox 402 (see FIG. 4A). In some embodiments, the motor module 410 can further include one or more bearing blocks 370, one or more lead nuts 720, and one or more lead cables 730. Other types of bearing blocks (or similar), cables (or similar), and nuts (or similar) are contemplated. A non-limiting example of a linear motor subsystem of the motor module 410 is shown in FIG. 14.

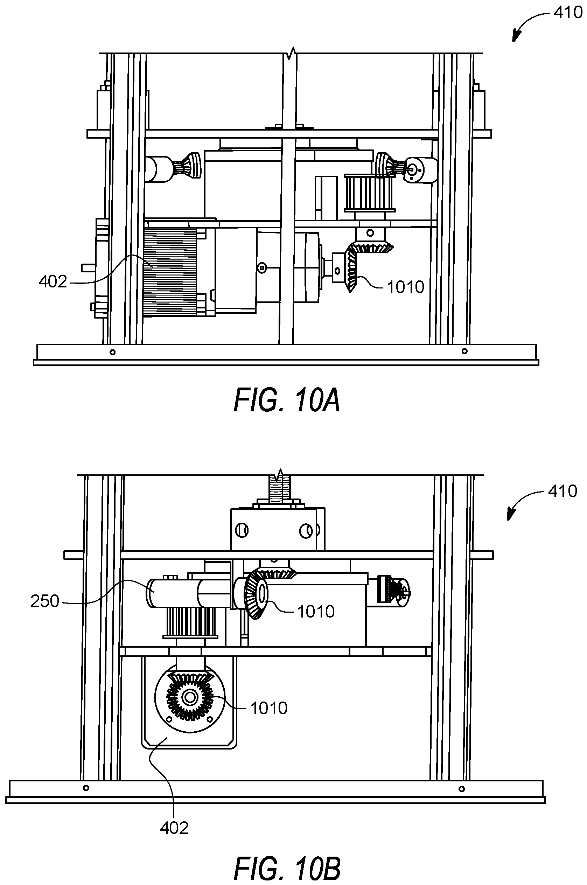

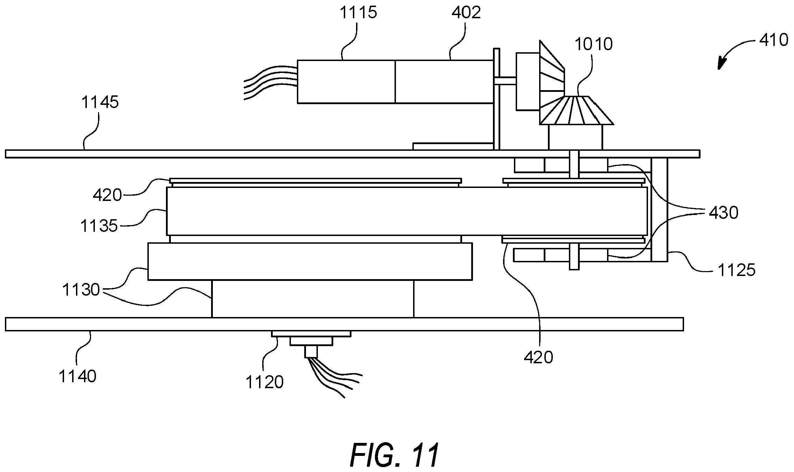

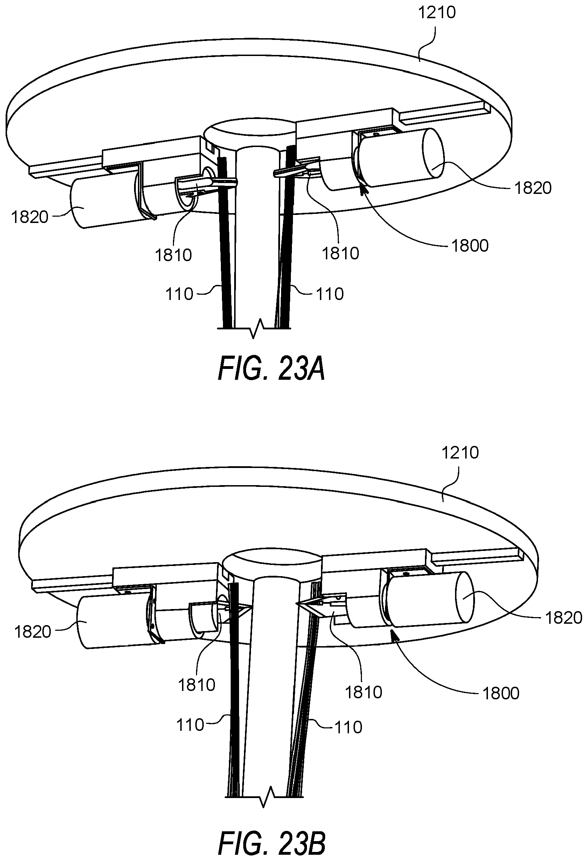

In some embodiments, as shown in FIGS. 10A-14, for example, the motor module 410 can include one or more rotary drive motors 1115, one or more timing pulleys 420, and one or more rotary bearing units 430. Non-limiting examples of a rotary motor subsystem of the motor module 410 is shown in FIGS. 23A-23E, 42A, and 42B. In some embodiments, shown in FIG. 11, the rotary motor subsystem can include a motor 1115, a gearbox 402, one or more bevel gears 1010, one or more bearings 430, one or more pulley brackets 1125, one or more pulleys 420, a slip ring 1120, a slewing ring 1130 or a slewing bearing, a timing belt 1135, a rotating plate 1140, and a stationary plate 1145. In some embodiments, the one or more pulleys 420 can be provided in the form of pulleys of different sizes, like the non-limiting example of a large pulley and a small pulley shown in FIG. 11. In some embodiments, additional components, quantities, features, and configurations are contemplated.

In some embodiments, the system 200 can include two linear motors 250 located near the front of the system 200. In some embodiments, the motor module 410 can also include one or more rail motors 255. In some embodiments, the cutting module 214 can include four rail motors 255 (see FIG. 5). In some embodiments, the roller module 310 can include three rail motors 255 (see FIG. 6). In some embodiments, the motor module 410 can further include one or more depth motors 260. In some embodiments, the cutting module 214 can include two depth motors 260.

In some embodiments, the motor module 410 can utilize one or more motors to drive the following tasks: rotation, linear movement, tool rail, tool aux, the heating module 216, the clamping module 320, the tool depth adjustment, or a combination thereof. Other motor quantities and configurations are contemplated.

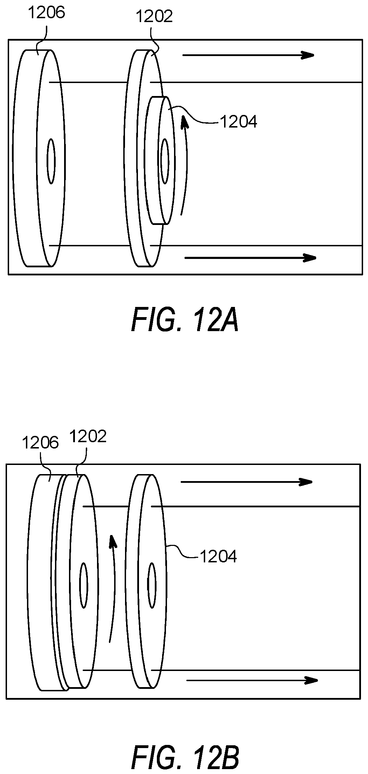

Non-limiting examples of rotary and linear motion driven by the motor module 410 are illustrated in the motion diagrams shown in FIGS. 12A and 12B. In the embodiment shown in FIG. 12A, linear motion 1202 is followed by rotary or rotational motion 1204, while the base plate is stationary 1206. In this embodiment, the linear motion 1202 followed by the rotary motion 1204 minimizes the mass of the components that are rotated. In some embodiments, a slip ring 1120 can be provided to pass power and/or communication signals to one or more of the rotating components. In the embodiment shown in FIG. 12B, rotary motion 1204 is followed by linear motion 1202, wherein the base plate remains stationary 1206. In this embodiment, the rotary motion 1204 followed by linear motion 1202 may require stronger motor drive power, minimize space restrictions on the one or more tool plates 212, and may not require a slip ring 1120 in some embodiments.

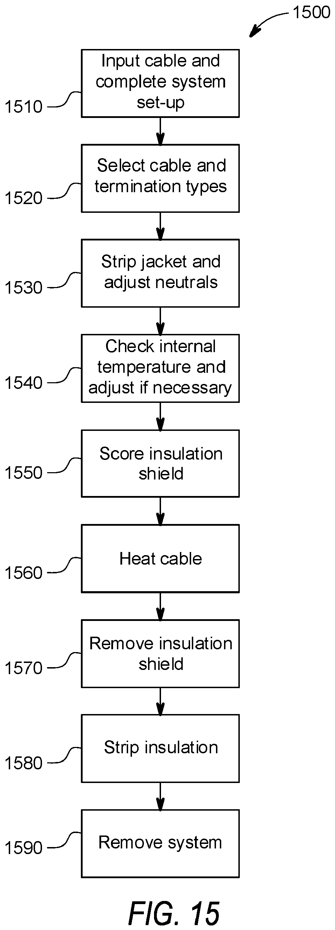

FIGS. 15-17 describe embodiments and processes of the advanced cable preparation method 1500 which can be performed by the advanced cable preparation system 200. In some embodiments, one or more portions of the cable preparation 1500 may not be used for certain cable types or applications. In some embodiments, the system 200 can automatically configure the subassemblies 210 and modules of the system to execute specific steps of the cable preparation method 1500 based on sensed cable parameters or other specifications.

In FIG. 15, an overview of an embodiment of the advanced cable preparation method 1500 is provided. In step 1910, a cable 100 is introduced to the system 200 via an aperture 205. In some embodiments, the control module 232 may initiate one or more of the system 200 subassemblies 210 and/or modules upon detection of the cable 100 at step 1910. At step 1920, the sensor module 206 can determine the type of cable 100, one or more cable parameters, and/or the termination type required by one or more specifications (e.g., job-specific, manufacturer, etc.). At step 1930, the cutting module 214 can remove the outer jacket 112 layer. The neutral wires 110 can be adjusted or modified using the neutral handling module 1200. At step 1940, the sensor module 206 can determine an internal temperature of the system 200 and/or the cable 100 and adjust the temperature using the heating module 216. In at least this way, the heating module 216 can preheat while other steps of the process are complete to reduce the total time it takes to perform the cable preparation method from start to finish. The cutting module 214 can score the outer semiconductor or insulation shield 108 layer in step 1950. At step 1960 the heating module 216 can heat the cable 100 to help facilitate the removal of the insulation shield 108 layer in step 1965. In some embodiments, the roller module 310 is also used to help facilitate the removal of the insulation shield 108 layer in step 1965. The insulation can be stripped and removed at step 1970 before ending the method and removing or otherwise disengaging the system 200 at step 1975. Non-limiting embodiments for removing the jacket 112 layer, the insulation shield 108 layer, and the insulation 106 layer are described in more detail in connection with FIGS. 32A-36B.

In some embodiments, other steps of the cable preparation method can be included and executed by the components of the system described herein. For example, the system 200 can be configured to automatically chamfer the insulation 106 layer, remove any intermediate layer(s) not otherwise described herein (e.g., an intermediate layer between the outer jacket 112 and the insulation shield 108, water blocking tape(s), sheath(s), etc.), cutting and removing the conductor 102, sanding, taping, and other operations.

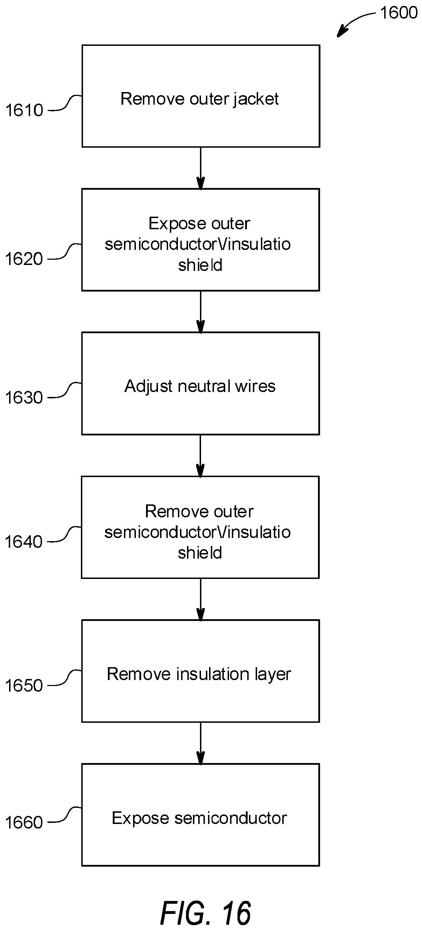

In some embodiments described in connection with FIG. 15, the heating module 216 is not used to remove the insulation shield 108 layer. FIG. 16 describes a process for completing a basic cable layer cutback process 1600 without using the heating module 216 or the roller module 310. In this embodiment, at step 2010 the outer jacket 112 can be removed to expose the insulation shield 108 layer at step 2020. In some embodiments, the neutral wires 110 can be adjusted at step 2030. At step 2040 the insulation shield 108 can be removed, exposing the insulation 106 layer. In some embodiments, the insulation shield 108 is removed at step 2040 by shaving the layer with a bonded semiconductor cutting blade 3610 (see FIGS. 34A-34C). At step 2050, the insulation 106 layer can be removed to expose the semiconductor at step 2060. Similar to step 2040, in some embodiments, the insulation 106 layer can be removed by shaving the layer with a blade 840 of the cutting module 214. Non-limiting embodiments for removing the jacket 112 layer, the insulation shield 108 layer, and the insulation 106 layer are described in more detail in connection with FIGS. 32A-36B.

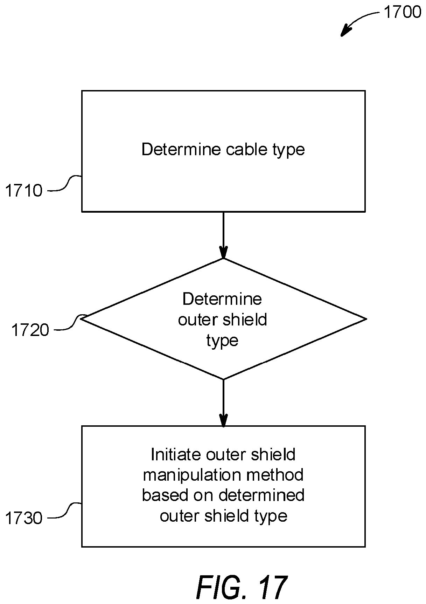

FIG. 17 shows a process for initiating an outer shield manipulation process 1700 for adjusting, modifying, or otherwise manipulating the neutral wires 110. At step 2110, the cable type is determined. In some embodiments, this can be determined automatically by the sensor module 206 or can be manually configured by a user through the interface module 234. At step 2120, the system 200 determines the type of neutral wires 110 or outer shield. In some aspects, the process of determining the type of neutral wires 110 or outer shield can be performed automatically or using a manual input. At step 2120, the control module 232 (or another subassembly) can initiate an outer shield manipulation method based on the type of neutral wires 110 identified.

In some embodiments, when round concentric neutral wires 110 or flat concentric neutral wires 110 are detected, the outer shield manipulation method may include moving individual strands of the neutral wires 110 using the neutral handling module 1200. In some embodiments, the individual strands can be positioned to be pointing radially outward in a direction normal to the conductor 102, pointing in a direction parallel to the conductor 102, or spiraled around the cable's outer jacket 112. Some non-limiting embodiments for different outer shield manipulation methods can be executed by the neutral handling module 1200 and are described in more detail in connection with FIGS. 18A-31C.

In some embodiments, when a tape shield neutral is detected, the outer shield will be cut back using the cutting module 214. In some embodiments, the tape shield is removed by the chip module 3600 when the tape shield is cut.

FIGS. 18A-20B illustrate an embodiment of an outer shield manipulation method executed by the neutral handling module 1200 using a shield effector 680. In FIG. 18A, the shield effector 680 has already engaged with and secured the neutral wires 110 by pulling out and turning the rotating plate 1210. The rotating plate 1210 can rotate while progressing down the cable 100 to keep the neutral wires 110 organized. In FIG. 18B, the rotating plate 1210 begins to twist as the rotating plate 1210 moves closer to the base 1220 of the cable 100 cutback location (e.g., where the jacket 112 has been removed). In some embodiments, twisting the rotating plate 1210 can help facilitate the extra length of the neutral wires to be wrapped at the base 1220 of the cutback location. FIG. 18C illustrates when the neutral wires 110 have been wrapped at the base 1220 and are tied around the cable 100 by twisting the rotating plate 1210 before the neutral handling module 1200 disengages or otherwise releases the neutral wires 110.

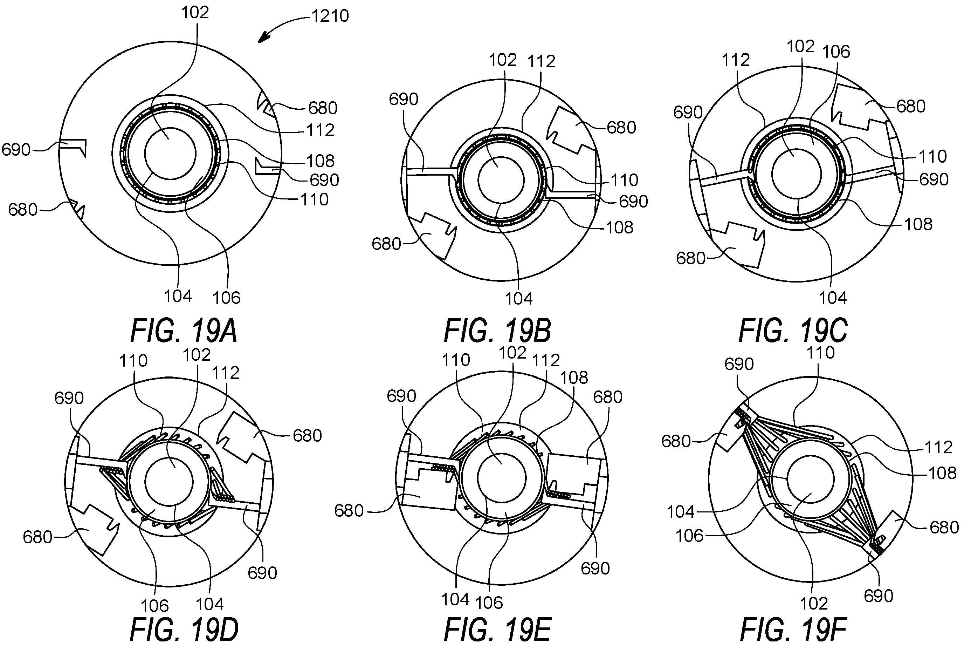

FIGS. 19A-19F illustrate a plan view of the bottom of the rotating plate 1210 of FIG. 18A. In some embodiments, the plate can be stationary and the neutral handling module 1200 can rotate. In FIG. 19A, the shield effector 680 has not engaged with the neutral wires 110. In FIG. 19B, a first arm of the shield effector 680 has engaged with the cable and secures the neutral wires 110 as the rotating plate 1210 begins to turn, as shown in FIG. 19C. In FIG. 19D, the neutral wires 110 are wrapped around the cable in an organized and aligned manner as the rotating plate 1210 continues to move closer to the base 1120 of the cable 100 cutback location (see FIGS. 18A-18C). In FIG. 19E, the second arm of the shield effector 680 secures the neutral wires 110 against the first arm 690 of the shield effector 680. In FIG. 19F, the shield effector 680 is pulling the secured neutral wires 110 away from the cut end of the cable 100 towards the cable 100 cutback location.

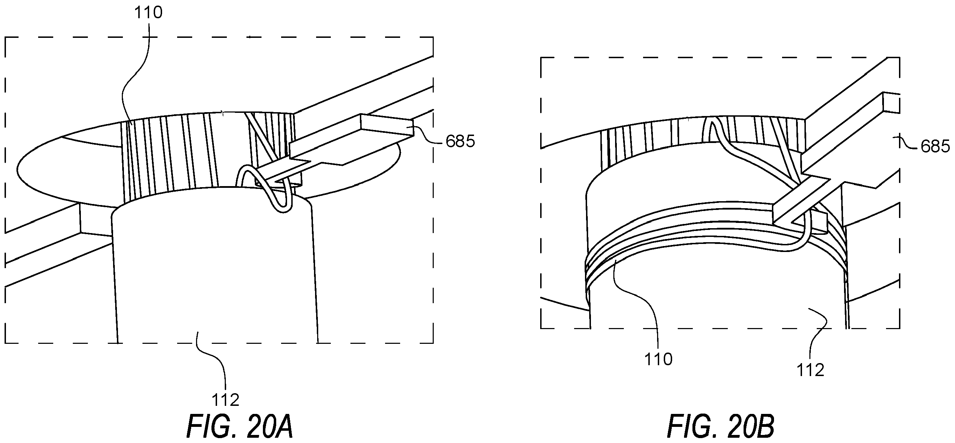

FIGS. 20A and 20B illustrate an alternative embodiment of an outer shield manipulation method executed by the neutral handling module 1200 using a hooked shield effector 685 with a single arm provided in the form of a hook. In this example, the hooked shield effector 685 can be actuated or otherwise moved to engage with one or more neutral wires 110. The hooked shield effector 685 secures the neutral wire(s) 110 and pulls the neutral wire(s) 110 away from the cut end of the cable 100 and neatly wraps the neutral wire 110 around the outer layer of the cable 100 below the cable 100 cutback location.

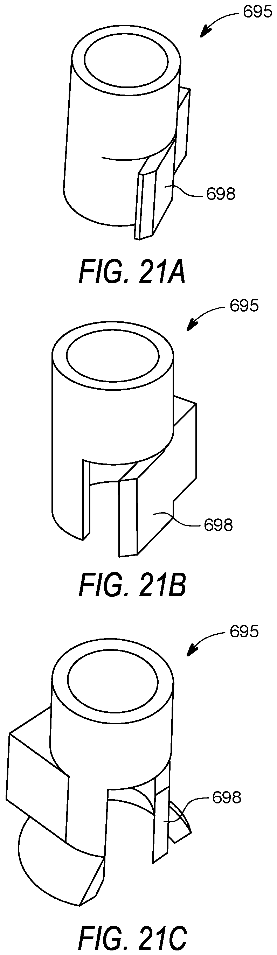

FIGS. 21A-21C illustrate an alternative embodiment of an outer shield end effector 695 with an arm provided in the form of a wide scraper 698. The views shown in FIGS. 21A-21C are rotated views of the same embodiment. The outer shield end effector 695 is designed to be coupled to a rotating plate 1210 (not shown, see FIGS. 18A-18C for a similar configuration). The wide scraper 698 is configured to engage with multiple neutral wires 110 as the rotating plate 1210 turns.

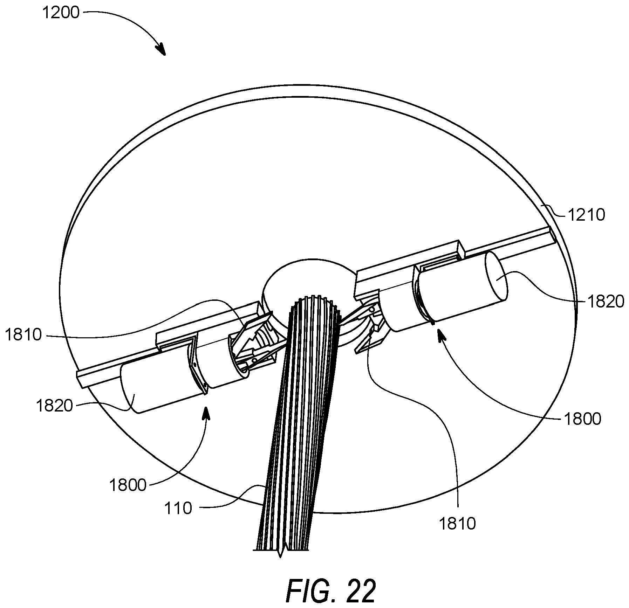

FIGS. 22-24C illustrate an alternative embodiment of an outer shield manipulation method executed by the neutral handling module 1200 using a gripping device 1800 shown in FIGS. 25A-25E. In this embodiment, the gripping device 1800 engages with the neutral wires 110 by closing a clasping device 1810 around the neutral wires 110. In the embodiment shown in FIG. 22, the clasping device 1810 is in an open position and not yet engaged with the neutral wires 110.

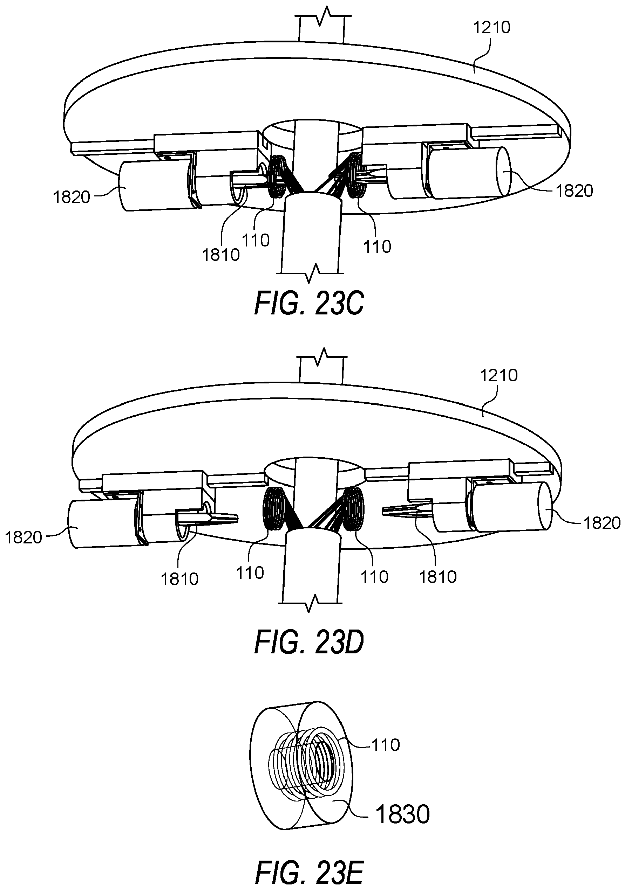

FIGS. 23A-23E illustrate an outer shield manipulation method executed by the neutral handling module 1200 using the gripping device 1800. In FIG. 23A, the neutral wires 110 are gripped by the closed clasping device 1810. In FIG. 23B the gripping device 1800 begins to rotate with the neutral wires 110 secured in the closed clasping device 1810. using the rotating device 1820. In some aspects, the rotating device 1820 may be provided in the form of a motor or actuator. In FIG. 23C the neutral wires 110 are coiled. In FIG. 23D the clasping device 1810 opens to release the neutral wires 110 and the gripping device 1800 is retracted so that the neutral handling module 1200 is disengaged. FIG. 23E is an example holding device 1830 for containing the coiled neutral wires 110. In some embodiments, the holding device 1830 may be removably coupled to the bottom face of the tool plate so that the gripping device 1800 can rotate within the holding device 1830 to organize the neutral wires 110 in a tight coil.

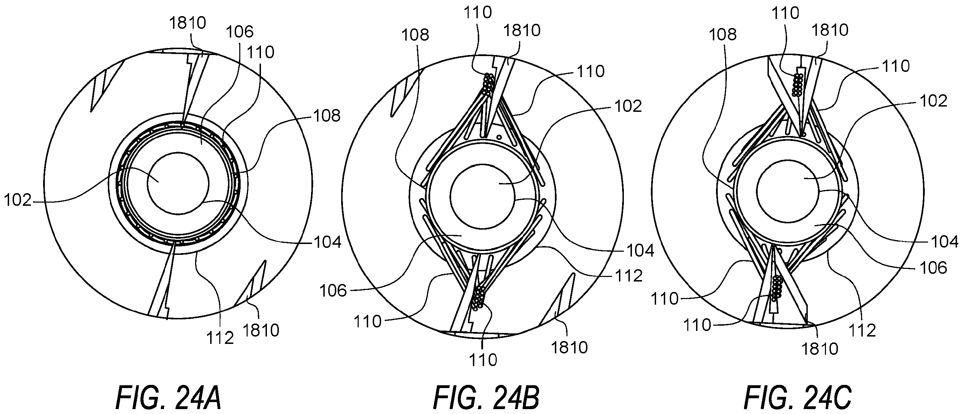

FIGS. 24A-24C illustrate a process diagram, from a plan view of the bottom of the rotating plate 1210 of FIG. 22 as the clasping device 1810 engages with the neutral wires 110 by rotating the gripping device 1800 around the cable to gather the neutral wires 110 in two groups (FIG. 24A), close the clasping device 1810 (FIG. 24B), and then rotate the entire gripping device 1800 to coil (FIG. 24C) the neutral wires 110. In some embodiments, the plate can be stationary, and the neutral handling module 1200, including the gripping device 1800 can rotate. As shown in the figures, the neutral handling module can include one or more gripping devices 1800, clasping devices 1810, and other components of the neutral handling module 1200.

FIGS. 25A and 25B illustrate an enlarged view of the clasping device 1810 of the gripping device 1800 in both an open/disengaged position (FIG. 25A) and a closed/engaged position (FIG. 25B). FIGS. 25C-25E illustrate an alternate view of the gripping device 1800 as it is rotated using a rotating device 1820 in both an open/disengaged position (FIG. 25C) and closed/ engaged positions (FIGS. 25D and 25E). In some embodiments, the rotating device 1820 may be provided in the form of a rotary motor. Other configurations of the gripping device 1800, clasping device 1810, and rotating device 1820 are contemplated.

FIGS. 26A-31C illustrate alternate embodiments for one or more outer shield manipulation methods that can be performed by the advanced cable preparation system 200 described herein. In some embodiments, the components used to execute each of the methods shown can be installed on one or more of the tool plates 212 of the system 200. In some embodiments, the control module 232 can initiate one or more of the outer shield manipulation methods using the neutral handling module 1200 based on the type of outer shield detected by the sensor module 206, as described in more detail in connection with FIG. 17.

FIGS. 26A and 26B illustrate a method for consistently dislodging neutral wires 110 from the end of the cable 100. In this embodiment, a high friction tool 2610 is placed against the ends of the neutral wires 110 at the cut end of the cable 100. The tool 2610 is pushed against the cut end of the cable 100 and rotated against the helix of the neutral wire 110 spiral, as shown in FIG. 26B. In some embodiments, the tool 2610 may include a handle 2620 for turning the high friction tool 2610. In some embodiments, the handle 2620 may be automatically controlled by a motor driven by the control module 232 or similar techniques for automatic rotation of the high friction tool 2610. In some embodiments, this method may be used for flat straps and/or concentric neutral wires 110.

FIGS. 27A and 27B illustrate a method for consistently dislodging neutral wires 110 from the end of the cable 100. In this embodiment, a small wheel 2710 is placed against the ends of the neutral wires 110 at the end of the cable 100. The wheel 2710 is pushed against the end of the cable 100 and rotated around the circumference of the cable 100 while gently pushing up the neutral wires 110 as it travels around the cable 100, as shown in FIG. 27B. In some embodiments, the wheel 2710 may be automatically controlled by a motor in communication with the control module 232, or other techniques for automatic rotation of the wheel 2710. In some embodiments, multiple wheels may be used. In some embodiments, this method may be used for flat straps and/or concentric neutral wires 110.

FIGS. 28A and 28B illustrate a method for consistently dislodging neutral wires 110 from the end of the cable 100. In this embodiment, scoop tool 2810, or a similar cone-shaped device, is placed against the ends of the neutral wires 110 at the end of the cable 100. The scoop tool 2810 fits closely around the outer diameter of the insulation shield 108 layer. In some embodiments, the scoop tool 2810 can be dynamically altered to accommodate a range of cable diameters 116. The scoop tool 2810 is pushed against the end of the cable 100 and pushed down the cable 100, as shown in FIG. 28B. In some embodiments, the scoop tool 2810 may be rotated. In some embodiments, the scoop tool 2810 may be automatically controlled by a motor in communication with the control module 232, or other techniques for automatic control of the scoop tool 2810. In some embodiments, this method may be used for concentric neutral wires 110.

FIGS. 29A-29E illustrate a method for consistently dislodging neutral wires 110 from the end of the cable 100. In this embodiment, a string tool 2910, or a similar device, is placed over the top exposed edge of one or more neutral wires 110 (FIGS. 29A and 29B, where FIG. 29A is a side plan view and FIG. 29B is a top plan view). The string tool 2910 is pulled away from the surface of the cable 100 (FIGS. 29C and 29D, where FIG. 29C is a side plan view and FIG. 29C is a top plan view). The string tool 2910 can be rotated (or the cable 100 rotated) to pull away all of the neutral wires 110. In some embodiments, a wedge tool 2920 can be used to consistently push the neutral wires 110 away from the cable surface as the string tool 2910 pulls the wires 110 away against the ends of the neutral wires 110 at the end of the cable 100, as shown in FIG. 29E. In some embodiments, the string tool 2910 may be automatically controlled by a motor in communication with the control module 232, or other techniques for automatic control of the string tool 2910. In some embodiments, this method may be used for straight neutral wires 110 that are exposed and extend beyond the end of the cable 100. In some embodiments, the cable 100 may be trimmed to expose the neutral wires 110.

FIGS. 30A-30D illustrate a method for consistently dislodging neutral wires 110 from the end of the cable 100. In this embodiment, a tube tool 3010, or a similar device, is placed between one or more neutral wires 110 and the insulation shield 108 layer. The tube tool 3010 is pushed down over the cable towards the jacket. The tube tool 3010 can be rotated (or the cable 100 rotated) to push away all of the neutral wires 110. In some embodiments, the tube tool 3010 can automatically stop at the cutback edge 1220 such that the neutral wires 110 extend perpendicular to the cable 100, as shown in FIG. 30B. In some embodiments, the tube tool 3010 can be pushed over the jacket 112 (FIG. 30C), to push the neutral wires 110 onto the jacket 112, such that the neutral wires are bent at the cutback edge 1220 and lay parallel to the cable 100, as shown in FIG. 30D. In some embodiments, the tube tool 3010 may be automatically controlled by a motor in communication with the control module 232, or other techniques for automatic control of the tube tool 3010. In some embodiments, this method may be used for straight neutral wires 110 that are slightly flared to allow the tube tool 3010 to fit between the neutral wires 110 and the insulation shield 108 layer. In some embodiments, the tube tool 3010 can be dynamically altered to accommodate a range of cable diameters 116. In some embodiments, the cable 100 may be modified to flare the neutral wires 110.

FIGS. 31A-31C illustrate a method for consistently dislodging neutral wires 110 from the end of the cable 100. In this embodiment, the neutral wires 110 are moved using a sealed grip 3105 and pulling the neutral wires 110 away from the cable 100. In some embodiments, this method may be completed by a clamping device, a gripping tool, or a similar device. In FIG. 31A, the sealed grip 3105 is placed between the neutral wires 110 and the insulation shield 108, such that a first side of the sealed grip 3105 is facing the neutral wires 110 and a second side of the sealed grip 3105 is facing the insulation shield 108. In FIG. 31B, the sealed grip 3105 is pulled back from the insulation shield 108, effectively dislodging the neutral wires 110 located on a first side of the sealed grip.

FIGS. 32A-32C illustrates a jacket removal tool 3210, which can be incorporated into the cutting and scoring tools 520 of the cutting module 214. The cutting module 214 can be used to remove the jacket 112 layer from the cable 100. In some embodiments, the jacket 112 is scored and removed. In some embodiments, the cut profile may be provided in the form of a continuous spiral (FIG. 32B). In some embodiments, the cut profile may be provided in the form of longitudinal strips. In some embodiments, the jacket 112 removal can be performed by pushing, peeling, or rolling the jacket 112 (FIG. 32C). In some embodiments, the jacket removal tool 3210 may be provided in the form of an independent tool plate 212.

As shown in FIGS. 33A-33E, the insulation shield 108, or outer semiconductor layer, can be removed using a heat and roll method. In some embodiments, the heat and roll method for removing the insulation shield 108 can include the steps of heating the cable 100 with hot air using the heating module 216 and engaging one or more of the rollers 610 with the cable 100 using the roller module 310 (FIG. 33A). In some embodiments, other types of heat can be applied using the heating module 216. The heat and roll method can further include the steps of scoring the insulation shield 108 layer using one or more scoring blades 830 or other cutting devices of the cutting module 214 (FIG. 33B). In some embodiments, the cable 100 can be rolled, sanded, or similar, to remove the remaining portion(s) of the insulation shield 108 layer to prepare the insulation 106 layer according to some specifications. In some embodiments, the insulation shield 108 layer can be peeled away from the cable 100 in a continuous spiral or strips (FIG. 33C). In some embodiments, the insulation shield 108 layer may be shaved using a blade 840 or another cutting device of the cutting module 214 (FIG. 33D). In some embodiments, the removed semiconductor layer can be removed using the chip module 3600 as described below. FIG. 33E illustrates an example of applying heat to a cable 100 using the heating module 216 before the one or more rollers 610 are applied to the cable, as shown in FIG. 33A. In the example shown in FIG. 33A, the heating module 216 is provided in the form of a heat plate. In the example shown in FIG. 33E, the heating module 216 is provided in the form of a heat gun or similar device for generating and outputting hot air.

FIGS. 34A-34C is an example of the chip module 3600 designed to manage and collect one or more of the layers as they are removed from the cable 100 during the cable preparation process(es) described herein. In some embodiments, the chip module 3600 can utilize multiple tools designed for a specific type of removed layer. As shown in FIGS. 34A-34C, the chip module 3600 can include a process for coiling the removed layer (e.g., jacket 112 and insulation 106) onto a rail, track, or similar. In some embodiments, the technique shown in FIGS. 34A-34C can be provided for a cable 100 with a bonded or shaveable insulation shield 108. In FIG. 34A, a chip roller 3602 is provided on the surface of the cutting plate. As shown in FIG. 34B, a chip 3604 is created as the layer is shaved or otherwise removed from the cable 100. In some embodiments, the layer is shaved with a blade or other cutting tool of the cutting module 214 in a continuous spiral. The chip 3604 can be routed to the chip roller 3602 and held against the chip roller 3602 using pressure from an actuator, a guiding roller, or similar. The system 200 can continue shaving the one or more layers while rotating the chip roller 3602 and the chip module 3600 continues to coil the chip 3604, as shown in FIG. 34C.

Other embodiments of the chip module 3600 may slice up the removed layers during the shaving process and store them in a compartment, storage bag, or similar. In at least this way, the chip module 3600 is designed to efficiently and effectively remove debris from the operating surfaces of the system 200 to prevent jamming, misalignment, damage, or other interference with the cable preparation processes. In some embodiments, the chip module 3600 may push the removed layers through and out of the system 200 or into a compartment, storage bag, or similar. In some embodiments, the compartment, storage bag, or similar, may include one or more storage devices, which can be integrated with (and/or coupled to) the system housing 202 or external to the system 200. In some embodiments, the compartment can be provided on an exterior face at the front of the system housing 202. In some embodiments, other locations and configurations are contemplated. The chip module 3600 may further include one or more collection devices 4800 in communication with the chip module 3600 to facilitate the removal of dust, debris, or other material (see FIG. 48). Other embodiments of the chip module 3600 may include a technique for wrapping the chip 3604 around a peeling gripper and either depositing the chip 3604 in a compartment or similar. In another embodiment, the chip 3604 can be wrapped around a peeling gripper and held in place. In another embodiment, the chip module 3600 can perform the steps of the heat and roll method described above, by peeling or otherwise removing strips of the insulation shield 108 and depositing each strip in a compartment, or similar.

After (or during) the insulation shield 108 layer removal process shown in FIG. 35, an insulation shield removal module 3500 can collect the chip 3604 (e.g., the removed layer(s)) in or near the rollers 610 or the roller module 310, as shown in FIGS. 35A and 35B.

In one non-limiting embodiment, as shown in FIG. 36, the cutting module 214 can be used to remove the insulation 106 layer from the cable 100. In some embodiments, the insulation 106 is cut with a blade or other cutting device of the cutting module 214 in a continuous spiral. In some embodiments, the removal of the insulation 106 layer is completed by the chip module 3600 by pulling the chip off of the conductor, as described in more detail below.

FIGS. 37A-37C are an embodiment of an adjustable support or clamping device 820. In some embodiments, the clamping device 820 may be used to dynamically support and align the cable 100 within a center axis of the system 200, and automatically adjust alignment based, at least in part, on the cable diameter, for many different cable diameters. In FIG. 37A, the clamping device 820 is engaged with the jacket 112 of the cable, as shown in the side elevational view above the plan figure. In FIG. 37B, the clamping device 820 is engaged with the conductor 102 and is adjusted to have a smaller diameter than in FIG. 37A. In FIG. 37C, the cable 100 has been released from the clamping device 820. In some embodiments, the clamping device 820 may remain fully extended toward the center axis of the system 200, as shown in FIG. 37C until a cable 100 is introduced to the clamping device 820.

A non-limiting example of a clamping module 320 provided in the form of a spring-loaded cutting tool 2502 engaged with a cable 100 is shown in FIGS. 38A and 38B. In this embodiment, the spring-loaded cutting tool 2502 is designed to follow the surface geometry of the cable 100 to ensure a consistent thickness for depth cuts made may the one or more cutters. In some embodiments, the clamping module 320 can be activated when the cutting module 214 is initiated to provide additional cable 100 support during the cutting process. The spring-loaded cutting tool 2502 can move freely along the cable 100 length and can be connected using one or more drive wheels coupled to the cable 100. In some embodiments, an additional support module may be provided in addition to the clamping module 320.

FIGS. 39A and 39B are an example of a sensor 3910 integrated with the cutting module 214. In some embodiments, the sensor module 206 can be used to identify a cable diameter 116 and/or layer depth and automatically adjust the blade depth adjustment tool 810, as discussed in more detail in connection with FIGS. 8A and 8B. In some embodiments, the sensor head 3920 can be used to detect the type of outer shield or neutral wires 110 in the cable. In some embodiments, a sensor head 3920 may engage with or otherwise communicate with a surface of the cable 100. In some embodiments, the sensor 3910 may be integrated with the cutter blade 530. Other embodiments and sensor 3910 locations are contemplated.

In one embodiment, as shown in FIG. 40A, the roller can be cylindrical and provided in the form of a friction roller 174 and the friction roller module 146 can include a motor 176 or similar device designed to rotate and/or drive the roller and an actuator 178 to position the friction roller 174 in relation to the cable 100. In this embodiment, the motor 176 can be mounted to or located inside a tool plate 212, like the one shown in FIGS. 41A and 41B, for example. The motor 176 is designed to rotate the friction roller 174 using a flexible shaft. In some aspects, the roller may be provided in the form of a curved roller, as illustrated in FIG. 40B. The curved roller 180 is designed to match a radius of the insulation layer 106 of the cable 100. In some embodiments, the rollers may be provided in the form of a V-groove roller 182, as illustrated in FIG. 40C. The V-groove roller 182 is designed to dynamically accommodate different cable diameters and interface with cables of varying sizes and parameters.

As shown in FIGS. 41A and 41B, the friction roller 174 and the friction roller module 146 can be mounted to a linear slide tool plate 212 such that the friction roller(s) 174 are pressed into the cable 100 by the actuator 178. The actuator 178 can be provided in the form of an air cylinder, an electric actuator, electric motors, or similar. The force applied to the cable 100 can be adjusted using an air pressure regulator (not shown) located within the tool plate 212. In some embodiments, the insulation layer 106 may be scored and/or heated prior to applying the friction roller module 146.

FIG. 41B is an example of the friction roller module 146 removing a strip of outer semiconductor. In at least this way, the friction roller module 146 can be used to complete a cable preparation process. For example, the advanced cable preparation system 200 cuts a continuous length of cable 100; the system 200 uses one or more tools, modules, subsystems, subassemblies 210, etc. to remove one or more outer layers of the cable 100 (e.g., the jacket 112), to expose the outer semiconductor layer. The semiconductor layer is scored longitudinally and radially with a sharp blade, which can be included in the cutting module 214. The exposed semiconductor layer is heated using an onboard heater of the heating module 216. The friction roller 174 is activated and begins to spin. The friction roller 174 is actuated by the actuator 178 and pressed into the cable 100 nearest to the cut end of the cable 100. The friction roller 174 moves longitudinally along the surface of the cable 100, moving away from the cut end of the cable 100. A strip of the semiconductor layer is removed as the friction roller 174 moves longitudinally along the cable 100. The friction roller 174 is indexed radially. The friction roller 174 repeats the steps of moving longitudinally along the cable 100, removing the semiconductor layer in strips, and indexing radially until the semiconductor layer is removed. In some embodiments, the semiconductor layer can be removed in 3-5 strips.

FIG. 42A is an alternative embodiment of the roller module 310 using a curved roller 180, as shown in FIG. 40B. The curved roller 180 is designed to match a radius of the insulation layer 106 of the cable 100. FIG. 42B is an alternative embodiment of the curved roller 180 tool using two curved rollers 180. Using two curved rollers 180, as shown in FIG. 42B, can remove the semiconductor layer in a single piece. In some embodiments, three or more curved rollers 180 can be provided to further improve the efficiency and accuracy of the cable preparation process.

FIG. 42B is an example of the curved roller tool comprising two curved rollers 180 removing the outer semiconductor layer. In at least this way, the curved rollers 180 can be used to complete a cable preparation process. For example, the advanced cable preparation system 200 cuts a continuous length of cable 100. The system 200 uses one or more tools, modules, subsystems, subassemblies 210, etc. to remove one or more outer layers of the cable 100 (e.g., the jacket 112), to expose the semiconductor layer. The semiconductor layer is scored radially with a sharp blade, which can be included in the cutting module 214. The exposed semiconductor layer is heated using an onboard heater of the heating module 216. The curved rollers 180 are activated and begin to spin. The curved roller tool is actuated by the actuator 178 and pressed into the cable 100 nearest to the jacket 112 (i.e., opposite the cut end of the cable 100). The curved roller tool moves longitudinally along the cable 100, toward the cut end of the cable 100. The semiconductor layer is removed as a continuous roll as the curved roller tool moves longitudinally along the cable 100.

FIG. 43 is an example of one or more tool turrets 4300 configured to deploy one or more tools coupled on one or more tool plates 212. In some forms, the tool turrets 4300 are installed on the rotating/translating plates 222 (e.g., a rotary plate). The one or more tool turrets 4300 may be used to index a particular tool into a specific position and/or sequence for executing one or more processes of the advanced cable preparation method. For example, as shown in FIG. 43, the one or more tool turrets 4300 can include a rotary tool turret 4310 and a deployable turret tool 4315. In some forms, the tool plate 212 may be configured with multiple rotary tool turrets 4310 and deployable turret tools 4315, one on either side of the cable 100. The one or more tool turrets 4300 can be used in conjunction with one another to complete certain tasks, processes, sequences, etc. In one non-limiting example, the one or more tool turrets 4300 can be used to deploy cutting tools, rollers (e.g., the cable holding guide rollers 4320), stripping tools, gripping tools, etc.). The one or more tool turrets 4300 can be used to deploy one or more of the tools, devices, and/or subassemblies described in connection with FIG. 2B.

FIG. 44 is an example of tool deployment carriages 4400 used to engage a tool relative to a surface of a cable 100. In some forms, the tool deployment carriages 4400 may be integrated with or otherwise in communication with the control module 232, the adjustment module 242, or a combination thereof. The tool deployment carriages 4400 may include a first stage carriage 4405 and a second stage carriage 4410. Each of the first stage carriage 4405 and the second stage carriage 4410 includes two stages of linear motion, controlled by a first linear drive 4415, and a second linear drive 4420. The two stage of linear motion include a first linear motion 4425 and a second linear motion 4430, as represented by the arrows. The first stage carriage 4405 controls the engagement of one or more of the cable holding guide rollers 4320 shown in FIG. 43. The cable holding guide rollers 4320 can be provided in the form of a localized set of rollers used to grip the cable 100. In some aspects the cable holding guide rollers 4320 move with the tool plate 212. The first stage carriage 4405 may adjust the engagement of the cable holding guide rollers 4320 to adjust the grip of the cable 100 as it is processed. The second stage carriage 4410 controls a tool depth (e.g., a cutting tool of the cutting module 214), to adjust the tool depth relative to the cable 100 surface. The second stage carriage 4410 typically moves adjacent to the first stage carriage 4405, such that the position for the first stage carriage 4405 serves as a basis for the adjustment of the second stage carriage 4410. Both the first stage carriage 4405 and the second stage carriage 4410 can be independently controlled (e.g., by the control module 232 or other subassembly) to grip and manipulate the cable 100.

FIGS. 45A-45C is a hinged rotary drum 4500 with provided in the form of a detachable tool plate 212. The drum 4500 includes the one or more tool plates 212. The drum 4500 is provided with one or more latches 4505 to allow the drum 4500 to be unlatched and detached from a cable 100. In at least this way, the drum 4500 is designed to be installed on a continuous uncut length of cable 100. The drum 4500 and the tool plate 212 is configured to rotate 360 degrees continuously during operation of the system 200. In some forms, the power module 208 for the drum 4500 is provided in the form of battery power. The drum 4500 is also designed to be controlled wirelessly (using the communication module 226, the control module 232, a combination thereof, or another subassembly). FIG. 45A shows the assembled drum 4500. FIG. 45B shows the drum 4500 unlatched and disengaged from the cable 100. The drum 4500 includes a first half 4510 and a second half 4515. When the first half 4510 and the second half 4510 are coupled together (e.g., latched using the one or more latches 4505), an electrical connector 4520 electrically couples the first half 4510 to the second half 4510. FIG. 45C is a top isometric view of the second half 4515 of the drum 4500. In some embodiments, the electrical connector 4520 may be provided in the form of an IR sensor.

FIG. 46A and 46B are alternative views of a clamping device of the clamping module 320. FIG. 46A is a clamp 4605 provided in the form of an alternative embodiment of the rigid clamp shown in FIGS. 9A and 9B. FIG. 46B is a clamp 4610 provided in the form of an alternative embodiment of the rigid clamp shown in FIGS. 9A, 9B and 46A. Both clamps 4605 and 4610 are designed to be adjustably fixed around the cable 100 to secure the cable 100 during the cable preparation process. In some aspects, the clamps 4605 and 4610 can be automatically adjusted using one or more of the sensor module 206, control module 232, adjustment module 242, or other subassembly. In some forms, the clamps 4605 and 4610 can also include one or more adjustment handles 4615 or similar device for manually adjusting the clamps 4605 and 4610.

FIG. 47 is an alternative embodiment of the heating module 216 shown in FIGS. 33A-D. The heater 4705 provides hot air to a cable channel 4710 using a hose 4715. In some embodiments, the heater 4705 is provided in the form of a heat gun. The hose 4715 is designed to withstand the temperature range of the heater 4705 output and connects to the cable channel 4710 using a connection coupling 4720. The connection coupling 4720 includes an aperture into the cable channel 4710 to allow the hot air to warm the cable 100. The cable channel 4710 is designed to accommodate cables 100 of various sizes and can be dynamically adjustable (either automatically or manually) in some embodiments. The heating module 416 may include one or more sensors 4725 (or a connection for a plug-n-play sensing device) to monitor the temperature of the cable 100. In some aspects, the heating module 216 may further include a temperature sensor to monitor the temperature of the heater 4705 and/or the hose 4715.

FIG. 48 is an example of a collection device 4800 provided in the form of a dust collection vacuum 4805. The dust collection vacuum 4805 can be coupled to the chip module 3600 (or other aspect of the system 200) to collect dust, debris, or other material as it is removed from the cable 100. In some aspects, the dust collection vacuum 4805 can be coupled to the chip module 3600 using a flexible hose 4810.

In some embodiments, the advanced cable preparation system and method can be provided in the form of a fixed mount platform or a mobile platform. In some embodiments, the mobile platform can be designed to drive the cable from either the near side or the far side. In some embodiments, the near-side-configured mobile platform uses the system to plunge into the cable 100 rather than starting at an end of the cable 100. In contrast, the far-side-configured mobile platform uses the system to drive over folded neutral wires 110 of the cable 100. Other deployment platforms and system configurations can also be provided. Both the fixed-mount platform and the mobile platform can utilize one or more of the subassemblies of FIG. 2B, described in connection with the embodiments above. Further, the fixed-mount platform and the mobile platform can be automated to adjust the position of the system 200 relative to the cable parameters and/or cutback location.

In some aspects, the system 200 can be provided in the form of a stationary platform attached to a free end of the cut end of the cable 100. In this example, the system 200 holds the cable stationary using the clamping module 320 while the cable preparation processes are executed. In some forms, the cable 100 may be fixed at both ends, moving the tool linearly down the cable as cuts are made. In some forms, the cable 100 may be fixed only at the free cut end, utilizing a movable clamp to secure portions of the cable as it is processed.

The figures provided are non-limiting examples of subassemblies 210 and modules of the system according to embodiments. In some embodiments, the cable preparation system 200 may include custom configurations with or without certain subassemblies 210, modules, and features installed or otherwise activated.

In some embodiments, one or more accessory tools and/or subsystems can be used to complete one or more steps in the cable preparation method described herein. In a non-limiting example, the advanced cable preparation system 200 can further include accessory tools, including but not limited to an insulation stripping tool, a semiconductor heating and peeling tool, a jacket stripping tool, a semiconductor scoring tool, and other tools. In some embodiments, the insulation stripping tool may include the jacket stripping and semiconductor scoring tool features. In some embodiments, the accessory tools may be combined into a single tool or tool plate, developed as separate tools to be used in connection with the integrated system, or fully integrated into the advanced cable preparation system, or a combination thereof. In some embodiments, a rigid grip or other aspect of the clamping module 320 can be used to stabilize the one or more accessory tools. In some embodiments, an operator can stabilize the one or more accessory tools. In some embodiments, the one or more accessory tools can be used to intelligently automate one or more of the cable preparation steps normally performed manually by an operator. For example, the accessory tools can be designed to control cable feed/speed rates, cutback stopping points, cutback depths settings, and other parameters used for cable preparation. The accessory tools can improve existing manual tools and processes by at least improving accuracy and consistency in cable preparation techniques and reducing human error by automating the process. In some embodiments, the one or more accessory tools may be provided in the form of a multi-tool subsystem wherein each tool is designed to perform one or more tasks or steps of the cable preparation method, autonomously, semi-autonomously, or in a manual override mode by the operator.

In some embodiments, the insulation stripping tool of the one or more accessory tools can be provided in the form of a rotary tool with one or more cutting blades. In some embodiments, the insulation tool can be integrated with the cutting module 214 of the advanced cable preparation system 200. The insulation tool can include a unique blade for cutting each of the insulation 106 and the jacket 112. In some embodiments, the insulation tool can include a single unique blade for cutting both the insulation 106 and the jacket 112. The insulation tool will be removed from the cable 100 after cutting the j acket to allow for the handling of the neutral shield. The insulation tool may further include a semiconductor scoring blade. In some embodiments, the insulation tool may be provided in the form of a tool designed to be rotated to score the semiconductor.

In some embodiments, the semiconductor heating and peeling tool of the one or more accessory tools can include one or more controllable heaters to bring the semiconductor to a specified temperature and a set of rollers to remove the semiconductor. In some embodiments, the semiconductor heating and peeling tool can be integrated with the heating module 216 and the roller module 310. In some embodiments, the semiconductor heating and peeling tool can include (or be mounted on) a rotational tool plate to evenly heat the semiconductor. In some embodiments, the semiconductor heating and peeling tool can include additional supports, mounting components, and other features designed to perform the cable preparation method in a controlled linear motion without damaging the heated cable.

In some embodiments, the one or more accessory tools can include a sensor system installed at one end (or both ends) of the cable at the beginning of the cable preparation method and operation of the cable preparation system. The sensor system can be provided in the form of one or more sensors, such as a camera/LED array 4305 (see FIG. 43) or a LIDAR to measure different characteristics of the cable 100 such as the cable type and thicknesses of its different layers. In some embodiments, the sensor system may be provided in the form of the sensor module 206, or otherwise communicatively coupled to the sensor module 206.

The sensor system can include both wired and wireless communication devices designed to allow one or more of the accessory tools to communicate with one another and transmit and/or broadcast one or more specifications/parameters of the cable 100. The accessory tools can also be designed to have wireless communication capabilities and automatically adjust operational parameters and/or settings of the one or more accessory tools (e.g., depth of cut) after receiving the cable specifications/parameters from the sensor system.

Additional proximity sensors and markers can be placed on different parts of the cable 100 and communicate with one or more of the accessory tools to provide location information to the accessory tools to assist with defining, measuring, and/or determining the length of cutback for each accessory tool.

The advanced cable preparation system and method described herein can be used in applications where electric cable terminations are required or desired. Applications can include, but are not limited to industrial facilities, manufacturing facilities, production facilities, commercial facilities (e.g., airports, hospitals, schools, etc.), energy facilities (e.g., wind farms, solar farms, etc.), electric facilities (e.g., power plant, substations, distribution centers, etc.), construction job sites, and other facilities or locations using electric cable terminations.

The advanced cable preparation system and method provide an automated process for preparing power cables for termination and is an improvement over the art for at least the following reasons. The automated cable preparation system and method provide a process for creating consistent, high-quality cutbacks. This method described herein further ensures the cables are prepared for termination according to manufacturer specifications. The advanced cable preparation system and method further improve yields and can reduce liabilities by minimizing human error, since the cable preparation process is automated. Similarly, there is a decreased reliance on scarce skilled labor resources, and those less-skilled field technicians can now increase productivity without compromising installation quality since they can be equipped with an accurate and efficient precision tool to automate the cable preparation process.

In other embodiments, other configurations are possible. For example, those of skill in the art will recognize, according to the principles and concepts disclosed herein, that various combinations, sub-combinations, and substitutions of the components discussed above can provide appropriate control for a variety of different configurations of automated cable preparation systems and related robotic platforms for a variety of applications.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

Further aspects of the disclosure will be described by way of example:
In Example 1, an advanced cable preparation system for removing layers of an electric cable comprising: a housing including an outer frame and one or more handle devices; a sensor module including a sensor for determining one or more cable parameters; a processing module including a processor and a memory unit, wherein the processing module is designed to process data collected from the sensor module; one or more subassemblies including a cutting module, a heating module, a roller module, and a neutral handling module; and a communication module designed to connect to an interface module.
In Example 2, the cable preparation system of claim 1, wherein the housing further includes an aperture designed to accept the electric cable.
In Example 3, the cable preparation system of claim 1 or 2 further comprising: a power module.
In Example 4, the cable preparation system of claim 3, wherein the power module is provided in a form of one or more battery units.
In Example 5, the cable preparation system of any one of claims 1 to 4, further comprising: a motor module with one or more motors.
In Example 6, the cable preparation system of any one of claims 1 to 5 further comprising: a clamping module, a sliding module, or a combination thereof.
In Example 7, a method of preparing an electric cable for termination, the method comprising: providing an advanced cable preparation system including a housing, a sensor module, a processing module, and one or more subassemblies; determining one or more cable parameters of the electric cable using the sensor module; stripping a jacket of the electric cable using a cutting module of the one or more subassemblies; manipulating one or more neutral wires of the electric cable based on the one or more cable parameters of the electric cable, wherein the manipulating is performed by a neutral handling module of the one or more subassemblies; scoring an insulation shield of the electric cable using the cutting module of the one or more subassemblies; heating the electric cable using a heating module of the one or more subassemblies; removing the insulation shield of the electric cable using a roller module of the one or more subassemblies; and stripping an insulation layer of the electric cable using the cutting module of the one or more subassemblies.
In Example 8, the method of claim 7 further comprising: detecting via the sensor module that the electric cable has entered the housing through an aperture in the housing; and initiating a cable preparation process as the electric cable is detected by the sensor module.
In Example 9, the method claim 8, further comprising: automatically configuring one more modules of the one or more subassemblies based on the one or more cable parameters of the electric cable.
In Example 10, the method of any one of claims 7 to 9, further comprising sensing a cable diameter of the electric cable using the sensor module.
In Example 11, the method of claim 10, further comprising: clamping the electric cable using one or more spring-loaded clamping devices designed to dynamically adapt to the cable diameter.
In Example 12, the method of any one of claims 7 to 11, further comprising: sensing a cable layer thickness of the electric cable using the sensor module.
In Example 13, the method of any one of claims 7 to 12, further comprising: pressing the roller module into the electric cable using an actuator, wherein the actuator is provided in a form of an electric actuator.
In Example 14, a method of preparing an electric cable for termination, the method comprising: providing an advanced cable preparation system including a housing, a sensor module, a processing module, and one or more subassemblies; determining one or more cable parameters of the electric cable using the sensor module; stripping a jacket of the electric cable using a cutting module of the one or more subassemblies; manipulating one or more neutral wires of the electric cable based on the one or more cable parameters of the electric cable, wherein the manipulating is performed by a neutral handling module of the one or more subassemblies; shaving an insulation shield of the electric cable using the cutting module of the one or more subassemblies; and stripping an insulation layer of the electric cable using the cutting module of the one or more subassemblies.
In Example 15, the method of claim 14 further comprising: collecting one or more of the shaved or stripped layers of the electric cable.
In Example 16, the method of claim 14 or 15 further comprising: clamping the electric cable with a clamping module of the one or more subassemblies.
In Example 17, the method of claim 16, further comprising: detecting the cutting module is activated using the sensor module; and activating the clamping module when the cutting module is activated.
In Example 18, the method of claim 16 or 17, further comprising: detecting whether the clamping module has been activated using the sensor module.
In Example 19, the method of any one of claims 14 to 18, wherein the one or more cable parameters includes a cable diameter.
In Example 20, the method of claim 19, further comprising: clamping the electric cable with a clamping module of the one or more subassemblies; and automatically adjusting the clamping module based on the cable diameter.

## Claims

1. An advanced cable preparation system for removing layers of an electric cable comprising:
a housing including an outer frame and one or more handle devices;
a sensor module including a sensor for determining one or more cable parameters;
a processing module including a processor and a memory unit, wherein the processing module is designed to process data collected from the sensor module;
one or more subassemblies including a cutting module, a heating module, a roller module, and a neutral handling module; and
a communication module designed to connect to an interface module.

2. The cable preparation system of claim 1, wherein the housing further includes an aperture designed to accept the electric cable.

3. The cable preparation system of claim 1 further comprising:
a power module.

4. The cable preparation system of claim 3, wherein the power module is provided in a form of one or more battery units.

5. The cable preparation system of claim 1, further comprising:
a motor module with one or more motors.

6. The cable preparation system of claim 1 further comprising:
a clamping module, a sliding module, or a combination thereof.

7. A method of preparing an electric cable for termination, the method comprising:
providing an advanced cable preparation system including a housing, a sensor module, a processing module, and one or more subassemblies;
determining one or more cable parameters of the electric cable using the sensor module;
stripping a jacket of the electric cable using a cutting module of the one or more subassemblies;
manipulating one or more neutral wires of the electric cable based on the one or more cable parameters of the electric cable, wherein the manipulating is performed by a neutral handling module of the one or more subassemblies;
scoring an insulation shield of the electric cable using the cutting module of the one or more subassemblies;
heating the electric cable using a heating module of the one or more subassemblies;
removing the insulation shield of the electric cable using a roller module of the one or more subassemblies; and
stripping an insulation layer of the electric cable using the cutting module of the one or more subassemblies.

8. The method of claim 7 further comprising:
detecting via the sensor module that the electric cable has entered the housing through an aperture in the housing; and
initiating a cable preparation process as the electric cable is detected by the sensor module.

9. The method claim 8, further comprising:
automatically configuring one more modules of the one or more subassemblies based on the one or more cable parameters of the electric cable.

10. The method of claim 7, further comprising:
sensing a cable diameter of the electric cable using the sensor module.

11. The method of claim 10, further comprising:
clamping the electric cable using one or more spring-loaded clamping devices designed to dynamically adapt to the cable diameter.

12. The method of claim 7, further comprising:
sensing a cable layer thickness of the electric cable using the sensor module.

13. The method of claim 7, further comprising:
pressing the roller module into the electric cable using an actuator, wherein the actuator is provided in a form of an electric actuator.
